# EUROPEAN PATENT SPECIFICATION

(11) **EP 4 271 007 B1**
(45) Date of publication and mention of the grant of the patent: **29.07.2026**
(21) Application number: 22745068.1
(22) Date of filing: 14.01.2022
(51) Int. Cl.: H04W 4/80, H04W 4/08, H04L 67/06

(54) **METHOD FOR SHARING FILES, AND ELECTRONIC DEVICE**
VERFAHREN ZUR GEMEINSAMEN NUTZUNG VON DATEIEN UND ELEKTRONISCHE VORRICHTUNG
PROCÉDÉ DE PARTAGE DE FICHIERS ET DISPOSITIF ÉLECTRONIQUE

(30) Priority: 29.01.2021 CN 202110130775
(43) Date of publication of application: 01.11.2023
(73) Proprietor: Huawei Technologies Co., Ltd., Shenzhen, Guangdong 518129 (CN)
(72) Inventor: ZHAO, Shanjun, Shenzhen, Guangdong 518129 (CN); SHEN, Jiajia, Shenzhen, Guangdong 518129 (CN); XU, Hui, Shenzhen, Guangdong 518129 (CN); NIE, Zhenxing, Shenzhen, Guangdong 518129 (CN)
(74) Representative: Maiwald GmbH
(86) International application number: PCT/CN2022/072174
(87) International publication number: WO 2022/161191

(56) References cited:
- EP-A1- 3 506 517
- WO-A1-2019/117625
- CN-A- 1 852 220
- CN-A- 110 622 487
- KR-A- 20170 053 307
- US-A1- 2013 040 576
- US-A1- 2013 138 736
- US-A1- 2013 217 324
- US-A1- 2013 324 169
- US-A1- 2015 312 953
- US-A1- 2016 323 863
- US-A1- 2018 317 061

## Description

### TECHNICAL FIELD

Embodiments of this application relate to the field of electronic device technologies, and in particular, to a file sharing method and an electronic device.

### BACKGROUND

With the development of science and technology, there are more types of and a larger quantity of electronic devices (such as a mobile phone, a tablet, a notebook computer, and a smart television). Each electronic device may store various files (such as a picture, a document, and a video), and content of files stored in different electronic devices may be different.

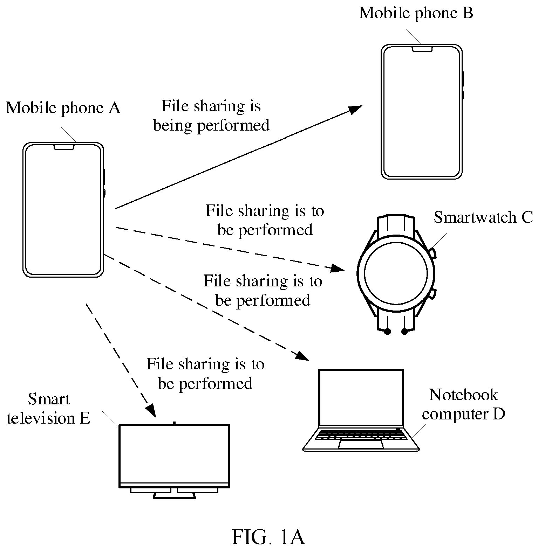

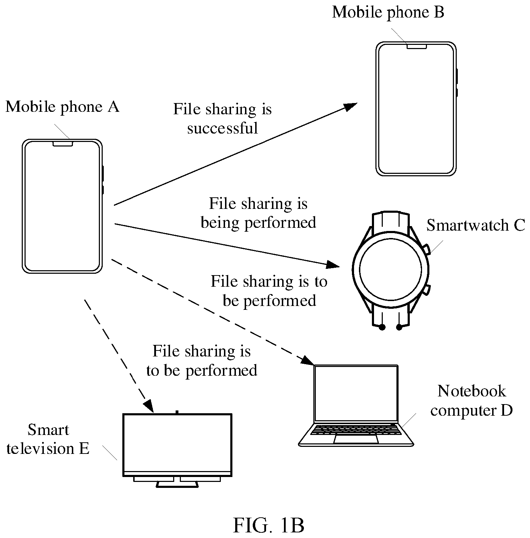

Currently, in order to share a file among a plurality of terminal devices, a transmitting-end device may share the file with a receiving-end device in any communication manner. For example, as shown in FIG. 1A, a transmitting-end device (such as a mobile phone A) may perform wireless communication with a plurality of receiving-end devices (such as a mobile phone B, a smartwatch C, a notebook computer D, and a smart television E) in a manner such as Bluetooth or Wi-Fi, so that a file in the transmitting-end device is separately sent to the plurality of receiving-end devices. For example, the mobile phone A may first send the file to the mobile phone B. With reference to FIG. 1B, after the mobile phone B successfully receives the file, the mobile phone A may send the file to the smartwatch C.

However, in the foregoing solution, each receiving-end device obtains the file from the transmitting-end device (that is, the mobile phone A). In other words, the transmitting-end device needs to sequentially send the file to the plurality of receiving-end devices. File sharing efficiency is relatively low.

International patent application WO 2019/117625 A1 describes an apparatus and a method for sharing content, wherein the content is shared within content sharing groups. United States patent application US 2013/138736 A1 describes a multimedia file sharing method and system, wherein slices of multimedia files are forwarded from one receiving device to other receiving devices.
European patent application EP 3 506 517 A1 describes a file sending method and a file receiving method.
United States patent application US 2016/323863 A1 describes an electronic device and an operation method for sharing a service or contents between electronic devices.

### SUMMARY

This application provides a file sharing method and an electronic device, which may reduce an amount of time used by a transmitting-end device to share a file with a plurality of receiving-end devices. Therefore, file sharing efficiency is improved.
The invention is set out in the appended set of claims.

According to a first aspect, this application provides a file sharing method, and the method may be applied to a scenario in which a transmitting-end device shares a file with a plurality of receiving-end devices.

In the method, the transmitting-end device may receive a selection operation performed on each of the plurality of receiving-end devices, where the selection operation is used to trigger the transmitting-end device to send a to-be-shared file to a corresponding receiving-end device, and the plurality of receiving-end devices include a first device, a second device, and a third device. Then, the transmitting-end device may send the to-be-shared file to the first device. In addition, after the transmitting-end device finishes sharing the to-be-shared file with the first device, the first device may send the to-be-shared file to the second device, and the transmitting-end device may send the to-be-shared file to the third device.

It can be learned from the foregoing solution that, not only the transmitting-end device may send the to-be-shared file to the receiving-end device, but also a receiving-end device that successfully receives the to-be-shared file may send the to-be-shared file to another receiving-end device. In this way, the transmitting-end device does not need to sequentially send the to-be-shared file to the plurality of receiving-end devices. This may reduce an amount of time used by the transmitting-end device to share the file with the plurality of receiving-end devices, and may improve file sharing efficiency.

For example, the transmitting-end device is a mobile phone A, the first device is a mobile phone B, the second device is a smartwatch C, and the third device is a notebook computer D. The mobile phone A may receive selection operations (such as tap operations) performed by a user on the mobile phone B, the smartwatch C, and the notebook computer D. In addition, after the mobile phone A receives the tap operation performed by the user on the mobile phone B, the mobile phone A may send the to-be-shared file to the mobile phone B. After the mobile phone A
shares the to-be-shared file with the mobile phone B, the mobile phone B may send the to-be-shared file to the smartwatch C, and the mobile phone A may send the to-be-shared file to the notebook computer D.

With reference to the first aspect, in a possible design, after the first device successfully receives the to-be-shared file from the transmitting-end device, the first device may send a first indication message to the transmitting-end device, where the first indication message is used to indicate that the first device successfully receives the to-be-shared file from the transmitting-end device. In addition, after the transmitting-end device receives the first indication message, the transmitting-end device may indicate the first device to send the to-be-shared file to the second device, and may alternatively indicate the second device to obtain the to-be-shared file from the first device.

It may be understood that, after the transmitting-end device receives the first indication message, the transmitting-end device may determine that the first device already has the to-be-shared file. Then, the transmitting-end device may indicate the first device to send the to-be-shared file to the second device. To be specific, the first device may receive an indication from the transmitting-end device, and send the to-be-shared file to the second device. Alternatively, the transmitting-end device may indicate the second device to obtain the to-be-shared file from the first device. To be specific, the first device may receive an indication from the transmitting-end device, and actively request the to-be-shared file from the first device. In this way, the receiving-end device that successfully receives the to-be-shared file can send the to-be-shared file to the another receiving-end device. Therefore, file sharing efficiency is improved.

With reference to the first aspect, in another possible design, after the first device successfully receives the to-be-shared file from the transmitting-end device, the first device may send the first indication message to the second device, where the first indication message is used to indicate that the first device successfully receives the to-be-shared file from the transmitting-end device. After receiving the first indication message, the second device may actively obtain the to-be-shared file from the first device.

In other words, the second device may also receive the first indication message from the first device. Then, the second device may determine that the first device already has the to-be-shared file. The second device may actively request the to-be-shared file from the first device. In this way, the receiving-end device that successfully receives the to-be-shared file can send the to-be-shared file to the another receiving-end device. Therefore, file sharing efficiency is improved.

With reference to the first aspect, in another possible design, the transmitting-end device may display transmission state information of transmitting the to-be-shared file to the receiving-end devices, where the transmission state information of the receiving-end devices includes first state information and second state information, the first state information is used to indicate that the to-be-shared file is being sent to a corresponding receiving-end device, and the second state information is used to indicate that the to-be-shared file is ready to be sent to a corresponding receiving-end device. For example, the first state information may be "Sending", and the second state information may be "Ready to send".

In addition, in a process in which the transmitting-end device sends the to-be-shared file to the first device, transmission state information of the first device is the first state information, and transmission state information of the second device and the third device is the second state information. For example, in a process in which the mobile phone A sends the to-be-shared file to the mobile phone B, the mobile phone A does not send the to-be-shared file to the smartwatch C and the notebook computer D. Transmission state information of the mobile phone B displayed by the mobile phone A is "Sending", and transmission state information of the smartwatch C and transmission state information of the notebook computer D that are displayed by the mobile phone A are "Ready to send".

In this way, the user can learn a state of receiving the to-be-shared file by each receiving-end device. This helps the user control a receiving-end device based on transmission state information of the receiving-end device. Therefore, user experience is improved.

With reference to the first aspect, in another possible design, the transmission state information may further include third state information and fourth state information, where the third state information is used to indicate that the to-be-shared file has been successfully sent to a corresponding receiving-end device, and the fourth state information is used to indicate that a corresponding receiving-end device fails to receive the to-be-shared file. For example, the third state information may be "Sending succeeded", and the fourth state information may be "Sending failed".

In addition, after the transmitting-end device finishes sharing the to-be-shared file with the first device, the transmitting-end device may update the transmission state information of the first device from the first state information to the third state information. For example, after the mobile phone A shares the to-be-shared file with the mobile phone B, the transmission state information of the mobile phone B displayed by the mobile phone A is updated from "Sending" to "Sending succeeded".

With reference to the first aspect, in another possible design, the transmitting-end device may display transmission state information of the second device as the first state information in a process in which the first device sends the to-be-shared file to the second device. In a process in which the transmitting-end device sends the to-be-shared file to the third device, the transmitting-end device displays transmission state information of the third device as the first state information.

For example, in a process in which the mobile phone B sends the to-be-shared file to the smartwatch C, and the mobile phone A sends the to-be-shared file to the notebook computer D, transmission state information of the smartwatch C displayed by the mobile phone A is "Sending", and transmission state information of the notebook computer D displayed by the mobile phone A is also "Sending".

With reference to the first aspect, in another possible design, the second device may send a first prompt message in a process in which the first device sends the to-be-shared file to the second device, where the first prompt message is used to indicate progress of receiving the to-be-shared file from the first device by the second device. For example, in a process in which the mobile phone B sends the to-be-shared file to the smartwatch C, the smartwatch C may send the following prompt message: "Two files from the mobile phone B are being received".

In a process in which the transmitting-end device sends the to-be-shared file to the third device, the third device may send a second prompt message, where the second prompt message is used to indicate progress of receiving the to-be-shared file from the transmitting-end device by the third device For example, in a process in which the mobile phone A sends the to-be-shared file to the notebook computer D, the notebook computer D may send the following prompt message: "Two files from the mobile phone A are being received".

In this way, the user may learn a state of receiving the to-be-shared file by each receiving-end device and an electronic device that shares the to-be-shared file. This improves user experience.

With reference to the first aspect, in another possible design, the selection operation is further used to trigger the transmitting-end device to add the corresponding receiving-end device to a sharing group that includes the transmitting-end device. The method further includes: The transmitting-end device may create a sharing group that includes the transmitting-end device, and generate a device list of the sharing group, where the device list includes a device identifier of the transmitting-end device. In addition, the transmitting-end device may send a first request message to the plurality of receiving-end devices, where the first request message is used to request the plurality of receiving-end devices to join the sharing group. Then, the first device may receive the first request message, and send a first response message to the transmitting-end device, where the first response message is used to indicate that the first device agrees to join the sharing group, and the first response message includes a device identifier of the first device. Subsequently, the transmitting-end device receives the first response message from the first device, adds the device identifier of the first device to the device list, and broadcasts the device list.

It should be noted that when other receiving-end devices (such as the second device and the third device) join the sharing group, the transmitting-end device updates the device list, and broadcasts an updated device list, so that all receiving-end devices (such as the first device, the second device, and the third device) in the sharing group synchronously update device lists.

With reference to the first aspect, in another possible design, if each receiving-end device in the sharing group successfully receives the to-be-shared file, the transmitting-end device may delete a device identifier of each receiving-end device from the device list.

In other words, after each receiving-end device in the sharing group has the to-be-shared file, the transmitting-end device may automatically delete the device identifier of each receiving-end device from the device list, to dissolve the sharing group. In this way, in the technical solution of this application, after each receiving-end device has the to-be-shared file, the user does not need to perform an operation again, and the sharing group may be automatically dissolved. This reduces user operations and improves user experience.

With reference to the first aspect, in another possible design, the transmitting-end device may generate a first ledger, where the first ledger is used by the transmitting-end device to record sharing record information of the to-be-shared file among the plurality of receiving-end devices. In addition, the transmitting-end device may update the first ledger based on transmission state information of each receiving-end device. Then, the transmitting-end device may synchronize an updated first ledger to the plurality of receiving-end devices.

It may be understood that the transmitting-end device synchronizes the updated first ledger to the plurality of receiving-end devices, to ensure real-time performance and accuracy of information recorded in ledgers of the receiving-end devices.

With reference to the first aspect, in another possible design, if the third device fails to receive the to-be-shared file from the transmitting-end device, the third device may select, based on an updated ledger, the first device from receiving-end devices that have the to-be-shared file, and obtain the to-be-shared file from the first device.

It may be understood that the ledger records sharing record information of the to-be-shared file among the plurality of receiving-end devices. Therefore, if the third device fails to receive the to-be-shared file from the transmitting-end device, the third device may select, based on the updated ledger, the first device from the receiving-end devices that have the to-be-shared file, and obtain the to-be-shared file from the first device. In this way, even if the third device fails to receive the to-be-shared file due to a device issue (such as a network disconnection) of the transmitting-end device, the third device may alternatively obtain the to-be-shared file from the first device. This ensures that the third device can successfully receive the to-be-shared file.

For example, in a process in which the mobile phone A sends the to-be-shared file to the notebook computer D, the mobile phone A is disconnected from a network. Consequently, the notebook computer D fails to receive the to-be-shared file from the mobile phone A (that is, the notebook computer D fails to receive the to-be-shared file). Then, the notebook computer D may obtain the to-be-shared file from the mobile phone B that already has the to-be-shared file.

With reference to the first aspect, in another possible design, the third device may send a second indication message to the fourth device, where the second indication message is used to indicate the fourth device to obtain the to-be-shared file from the first device.

For example, in a process in which the mobile phone A sends the to-be-shared file to the notebook computer D, the mobile phone A is disconnected from a network. Consequently, the notebook computer D fails to receive the to-be-shared file from the mobile phone A. In addition, the mobile phone A has not sent the to-be-shared file to another receiving-end device (such as a smart television E). The notebook computer D may send the second indication message to the smart television E. In this way, the smart television E may obtain the to-be-shared file from the mobile phone B.

According to a second aspect, this application provides a file sharing method, and the method may be applied to a scenario in which a transmitting-end device shares a file with a plurality of receiving-end devices.

In the method, the transmitting-end device may receive a selection operation performed on each of the plurality of receiving-end devices, where the selection operation is used to trigger the transmitting-end device to send a to-be-shared file to a corresponding receiving-end device, and the plurality of receiving-end devices include a first device, a second device, and a third device. In addition, the transmitting-end device may send the to-be-shared file to the first device. After the transmitting-end device finishes sharing the to-be-shared file with the first device, the transmitting-end device may send the to-be-shared file to the third device. Moreover, the transmitting-end device may indicate the first device to send the to-be-shared file to the second device. Alternatively, the transmitting-end device may indicate the second device to obtain the to-be-shared file from the first device.

It can be learned from the foregoing solution that, not only the transmitting-end device may send the to-be-shared file to the receiving-end device, but also a receiving-end device that successfully receives the to-be-shared file may send the to-be-shared file to another receiving-end device. In this way, the transmitting-end device does not need to sequentially send the to-be-shared file to the plurality of receiving-end devices. This may reduce an amount of time used by the transmitting-end device to share the file with the plurality of receiving-end devices, and may improve file sharing efficiency.

With reference to the second aspect, in another possible design, the transmitting-end device may receive a first indication message from the first device, where the first indication message is used to indicate that the first device successfully receives the to-be-shared file from the transmitting-end device.

With reference to the second aspect, in another possible design, the transmitting-end device may display transmission state information of transmitting the to-be-shared file to the receiving-end devices, where the transmission state information of the receiving-end devices includes first state information and second state information, the first state information is used to indicate that the to-be-shared file is being sent to a corresponding receiving-end device, and the second state information is used to indicate that the to-be-shared file is ready to be sent to a corresponding receiving-end device. In a process in which the transmitting-end device sends the to-be-shared file to the first device, transmission state information of the first device is the first state information, and transmission state information of the second device and the third device is the second state information.

With reference to the second aspect, in another possible design, the transmitting-end device displays transmission state information of the third device as the first state information in a process in which the transmitting-end device sends the to-be-shared file to the third device. In a process in which the first device sends the to-be-shared file to the second device, the transmitting-end device displays transmission state information of the second device as the first state information.

With reference to the second aspect, in another possible design, the transmitting-end device may create a sharing group that includes the transmitting-end device, and generate a device list of the sharing group, where the device list includes a device identifier of the transmitting-end device. In addition, the transmitting-end device may send a first request message to the plurality of receiving-end devices, where the first request message is used to request the plurality of receiving-end devices to join the sharing group. Then, the transmitting-end device may receive a first response message from the first device, add a device identifier of the first device to the device list, and broadcast the device list, where the first response message is used to indicate that the first device agrees to join the sharing group, and the first response message includes the device identifier of the first device.

With reference to the second aspect, in another possible design, if each receiving-end device in the sharing group successfully receives the to-be-shared file, the transmitting-end device may delete a device identifier of each receiving-end device from the device list.

With reference to the second aspect, in another possible design, the transmitting-end device may generate a first ledger, where the first ledger is used by the transmitting-end device to record sharing record information of the to-be-shared file among the plurality of receiving-end devices. Then, the transmitting-end device may update the first ledger based on transmission state information of each receiving-end device. In addition, the transmitting-end device may synchronize an updated first ledger to the plurality of receiving-end devices.

According to a third aspect, this application provides a file sharing method, where the method may be applied to a receiving-end device, and the receiving-end device is configured to receive a to-be-shared file.

With reference to the third aspect, in a possible design, the receiving-end device may receive the to-be-shared file sent by a transmitting-end device or a receiving-end device that has the to-be-shared file. After the receiving-end device successfully receives the to-be-shared file, the receiving-end device may send the to-be-shared file to a receiving-end device that does not have the to-be-shared file.

It can be learned from the foregoing solution that, not only the transmitting-end device may send the to-be-shared file to the receiving-end device, but also a receiving-end device that successfully receives the to-be-shared file may send the to-be-shared file to another receiving-end device. In this way, the transmitting-end device does not need to sequentially send the to-be-shared file to a plurality of receiving-end devices. This may reduce an amount of time used by the transmitting-end device to share the file with the plurality of receiving-end devices, and may improve file sharing efficiency.

With reference to the third aspect, in another possible design, the receiving-end device may send a first indication message to the transmitting-end device or the receiving-end device that does not have the to-be-shared file, where the first indication message is used to indicate that the receiving-end device successfully receives the to-be-shared file from the transmitting-end device.

With reference to the third aspect, in another possible design, the receiving-end device may send a first prompt message or a second prompt message in a process in which the receiving-end device receives the to-be-shared file. The first prompt message is used to indicate progress of receiving, by the receiving-end device, the to-be-shared file from the receiving-end device that has the to-be-shared file, and the second prompt message is used to indicate progress of receiving the to-be-shared file from the transmitting-end device by the receiving-end device.

With reference to the third aspect, in another possible design, the receiving-end device may receive a first request message from the transmitting-end device, where the first request message is used to request the receiving-end device to join a sharing group. Then, the receiving-end device sends a first response message to the transmitting-end device, where the first response message is used to indicate that the receiving-end device agrees to join the sharing group, and the first response message includes a device identifier of the receiving-end device.

With reference to the third aspect, in another possible design, the receiving-end device may generate a second ledger in response to joining the sharing group by the receiving-end device, where the second ledger is used by the receiving-end device to record sharing record information of the to-be-shared file among a plurality of receiving-end devices. Then, the receiving-end device may update the second ledger based on a first ledger updated by the transmitting-end device, where the first ledger is used by the transmitting-end device to record sharing record information of the to-be-shared file among the plurality of receiving-end devices.

With reference to the third aspect, in another possible design, if the receiving-end device fails to receive the to-be-shared file from the transmitting-end device, the receiving-end device may select, based on an updated second ledger, any receiving-end device from receiving-end devices that have the to-be-shared file, and obtain the to-be-shared file from the selected receiving-end device that has the to-be-shared file.

With reference to the third aspect, in another possible design, if the receiving-end device fails to receive the to-be-shared file from the transmitting-end device, the receiving-end device may send a second indication message to another receiving-end device that does not have the to-be-shared file, where the second indication message is used to indicate the another receiving-end device that does not have the to-be-shared file to obtain the to-be-shared file from the device that has the to-be-shared file.

According to a fourth aspect, this application provides an electronic device, and the electronic device is a transmitting-end device. The electronic device includes a memory, a display, a communication module, and one or more processors, where the memory, the display, and the communication module are coupled to the processor. The display is configured to display an image or interface generated by the processor, the communication module is configured to communicate with another device, and the memory is configured to store data in the electronic device. The memory is further configured to store computer program code, the computer program code includes computer instructions, and when the computer instructions are executed by the processor, the electronic device is enabled to perform the method according to the first aspect or the second aspect, and any one of the possible designs thereof.

According to a fifth aspect, this application provides an electronic device, and the electronic device is a receiving-end device. The electronic device includes a memory, a display, a communication module, and one or more processors, where the memory, the display, and the communication module are coupled to the processor. The display is configured to display an image or interface generated by the processor, the communication module is configured to communicate with another device, and the memory is configured to store data in the electronic device. The memory is further configured to store computer program code, the computer program code includes computer instructions, and when the computer instructions are executed by the processor, the electronic device is enabled to perform the method according to the first aspect or the third aspect, and any one of the possible designs thereof.

According to a sixth aspect, this application provides a chip system, and the chip system is applied to an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the electronic device performs the method according to the first aspect, the second aspect, or the third aspect, and any one of the possible designs thereof.

According to a seventh aspect, this application provides a computer storage medium, where the computer storage medium includes computer instructions. When the computer instructions are executed on an electronic device, the electronic device is enabled to perform the method according to the first aspect, the second aspect, or the third aspect, and any one of the possible designs thereof.

According to an eighth aspect, this application provides a computer program product. When the computer program product runs on a computer, the computer is enabled to perform the method according to the first aspect, the second aspect, or the third aspect, and any one of the possible designs thereof.

It may be understood that, for beneficial effects that can be achieved by the method according to the second aspect, the third aspect, and any one of the possible designs thereof, the electronic device according to the fourth aspect, the fifth aspect, and any one of the possible designs thereof, the chip system according to the sixth aspect, the computer storage medium according to the seventh aspect, and the computer program product according to the eighth aspect, reference may be made to beneficial effects of the first aspect and any one of the possible designs thereof. Details are not described herein.

### BRIEF DESCRIPTION OF DRAWINGS

FIG. 1A to FIG. 1C are schematic diagrams of architectural composition of a file sharing system according to an embodiment of this application;
FIG. 2A is a schematic diagram of a hardware structure of an electronic device according to an embodiment of this application;
FIG. 2B is a schematic diagram of a system architecture of an electronic device according to an embodiment of this application;
FIG. 2C is a schematic diagram of another system architecture of an electronic device according to an embodiment of this application;
FIG. 3A is a schematic diagram of an instance of a display interface of an electronic device according to an embodiment of this application;
FIG. 3B is a flowchart of a file sharing method according to an embodiment of this application;
FIG. 4A is a schematic diagram of an instance of another display interface of an electronic device according to an embodiment of this application;
FIG. 4B is a flowchart of an electronic device discovery method according to an embodiment of this application;
FIG. 5A to FIG. 5C are schematic diagrams of instances of other display interfaces of an electronic device according to an embodiment of this application;
FIG. 6A to FIG. 6C are schematic diagrams of instances of other display interfaces of electronic devices according to an embodiment of this application;
FIG. 7A and FIG. 7B are schematic diagrams of instances of other display interfaces of electronic devices according to an embodiment of this application;
FIG. 8(a) and FIG. 8(b) are schematic diagrams of instances of other display interfaces of electronic devices according to an embodiment of this application;
FIG. 9A is a flowchart of another file sharing method according to an embodiment of this application;
FIG. 9B is a flowchart of a method for creating a sharing group according to an embodiment of this application;
FIG. 10 is a schematic diagram of an instance of another display interface of an electronic device according to an embodiment of this application;
FIG. 11A-1 and FIG. 11A-2 are a flowchart of a file sharing method according to an embodiment of this application;

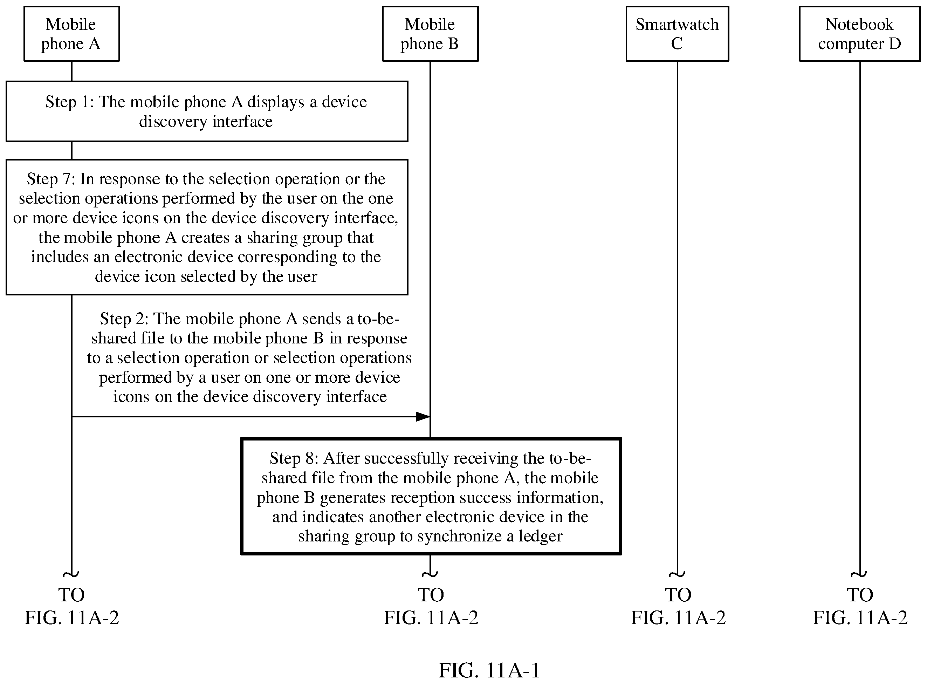

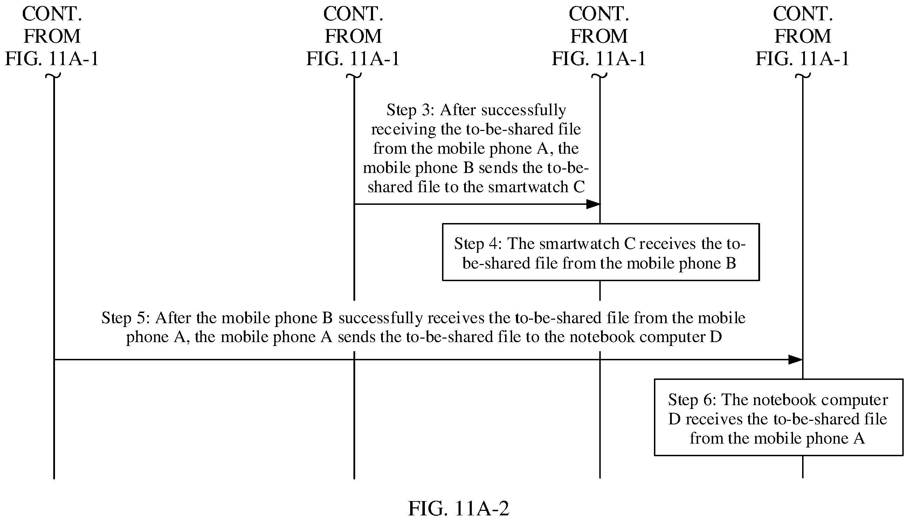

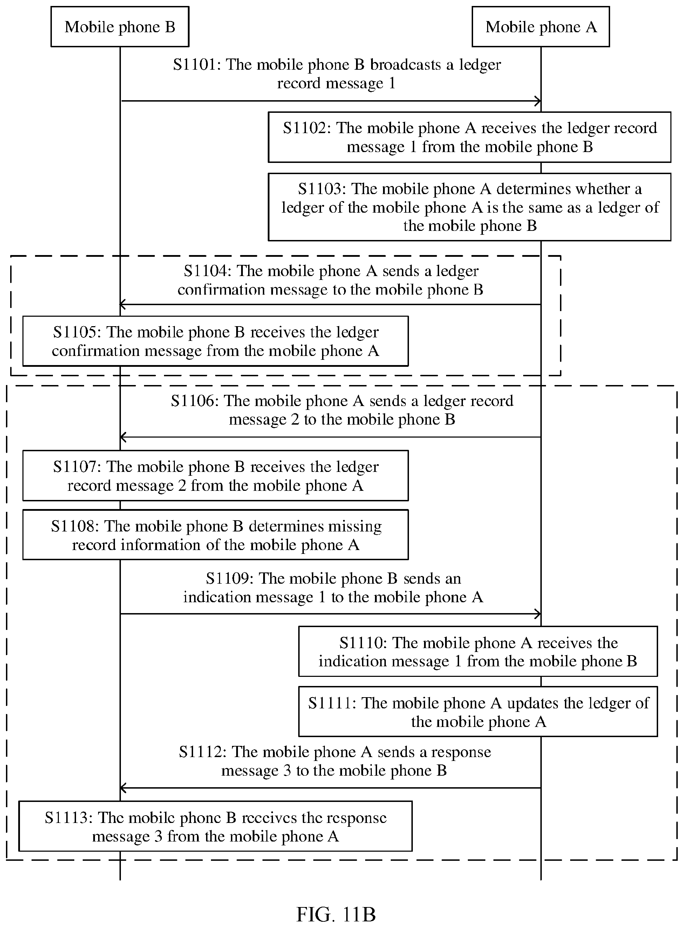

FIG. 11B is a flowchart of a ledger synchronization method according to an embodiment of this application;

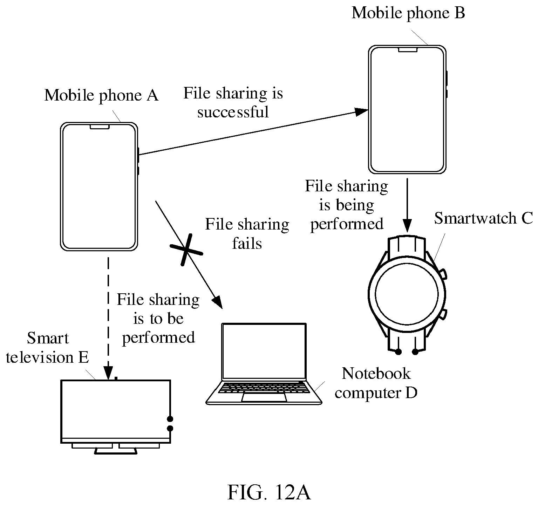

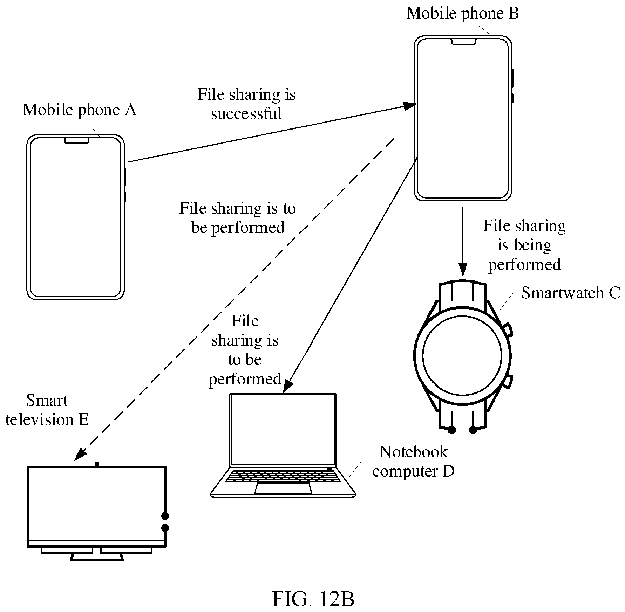

FIG. 12A and FIG. 12B are schematic diagrams of architectural composition of a file sharing system according to an embodiment of this application;
FIG. 13A-1 and FIG. 13A-2 are a flowchart of a file sharing method according to an embodiment of this application;

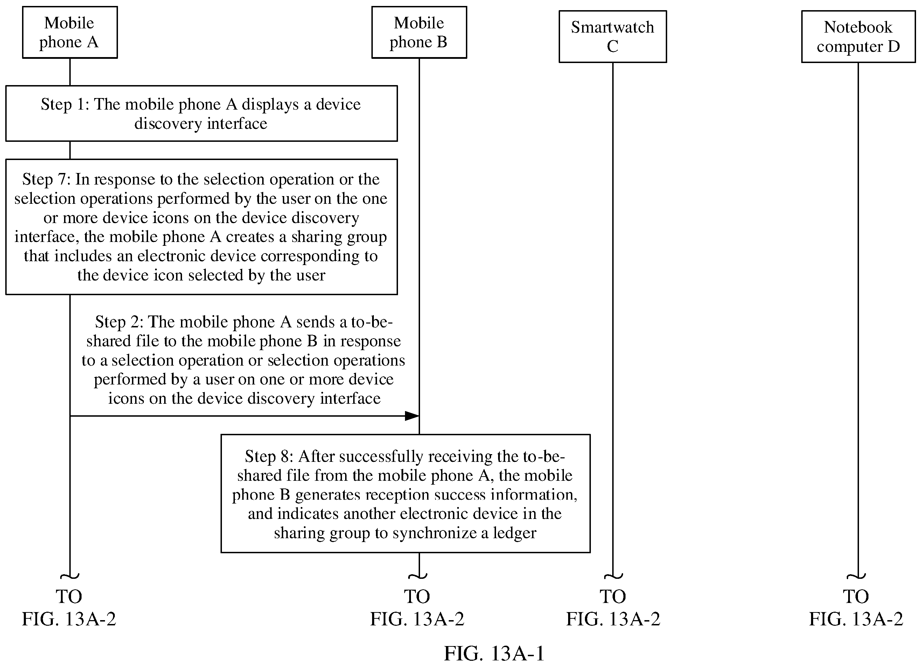

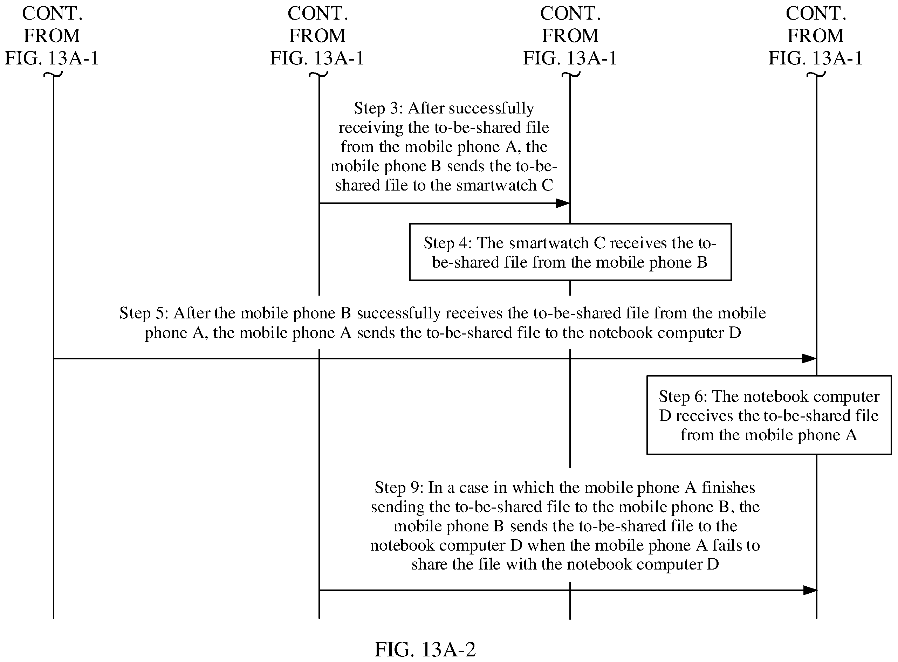

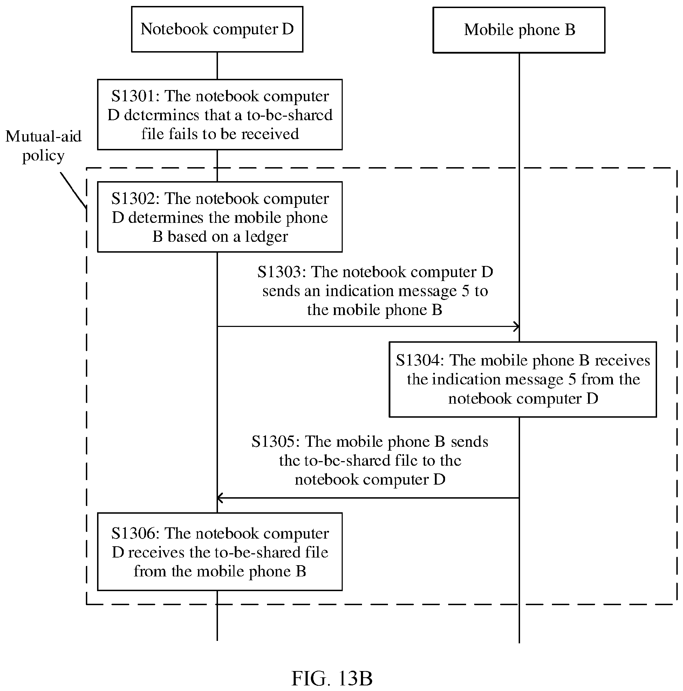

FIG. 13B is a flowchart of another file sharing method according to an embodiment of this application;

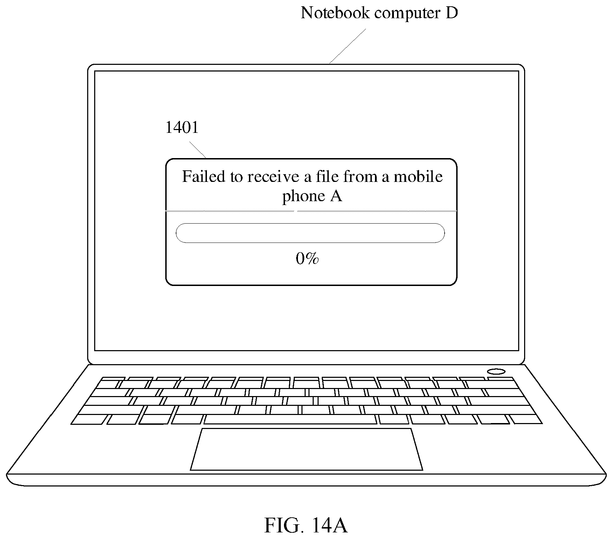

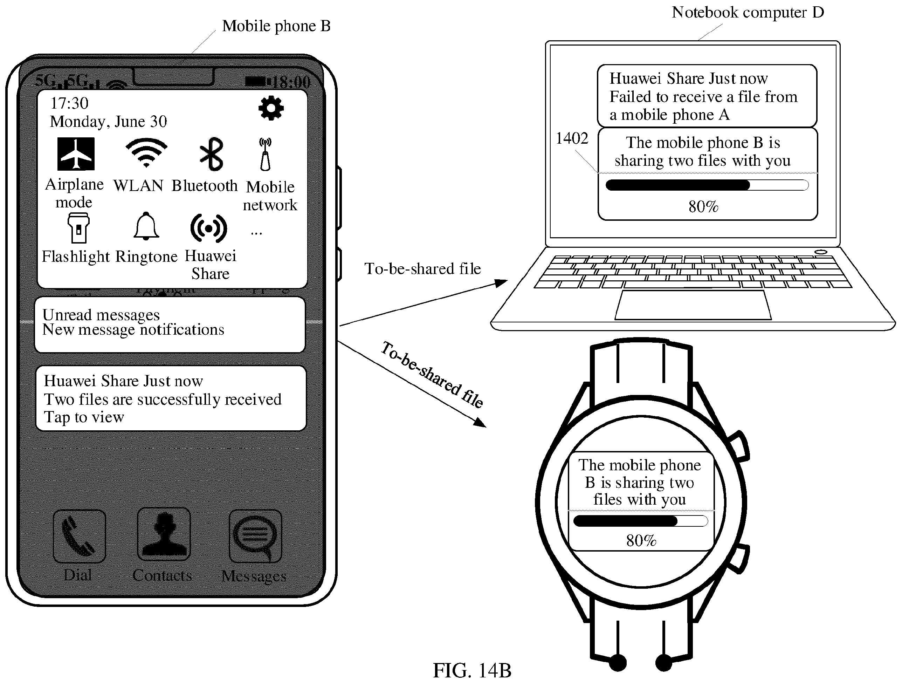

FIG. 14A and FIG. 14B are schematic diagrams of instances of other display interfaces of electronic devices according to an embodiment of this application;

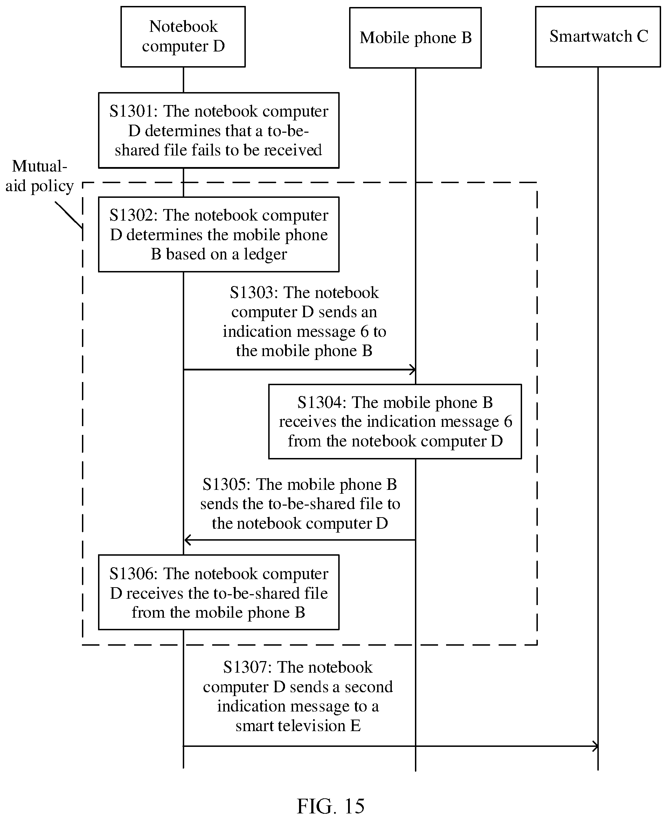

FIG. 15 is a flowchart of another file sharing method according to an embodiment of this application;
FIG. 16A-1 and FIG. 16A-2 are a flowchart of another file sharing method according to an embodiment of this application;

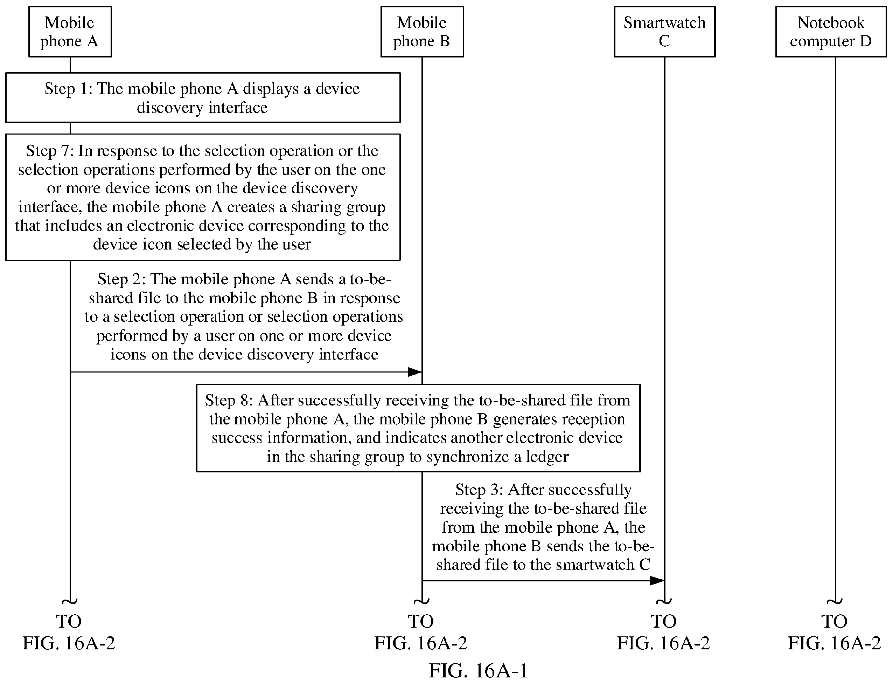

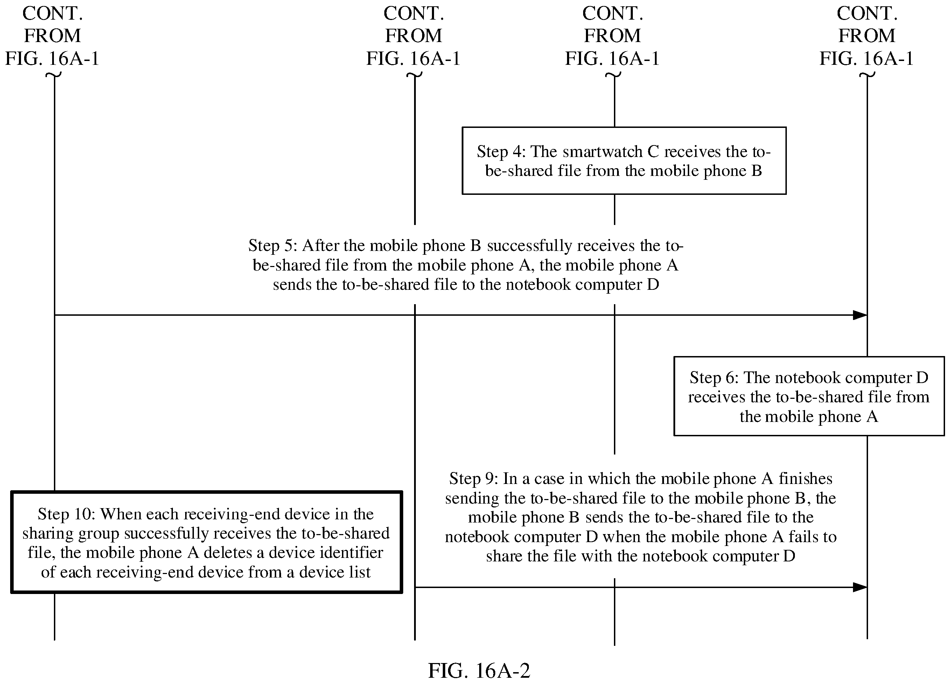

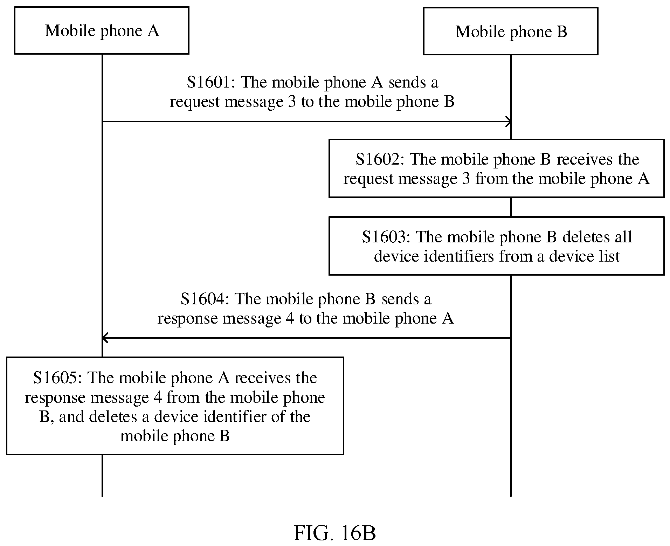

FIG. 16B is a flowchart of a method for dissolving a sharing group according to an embodiment of this application;

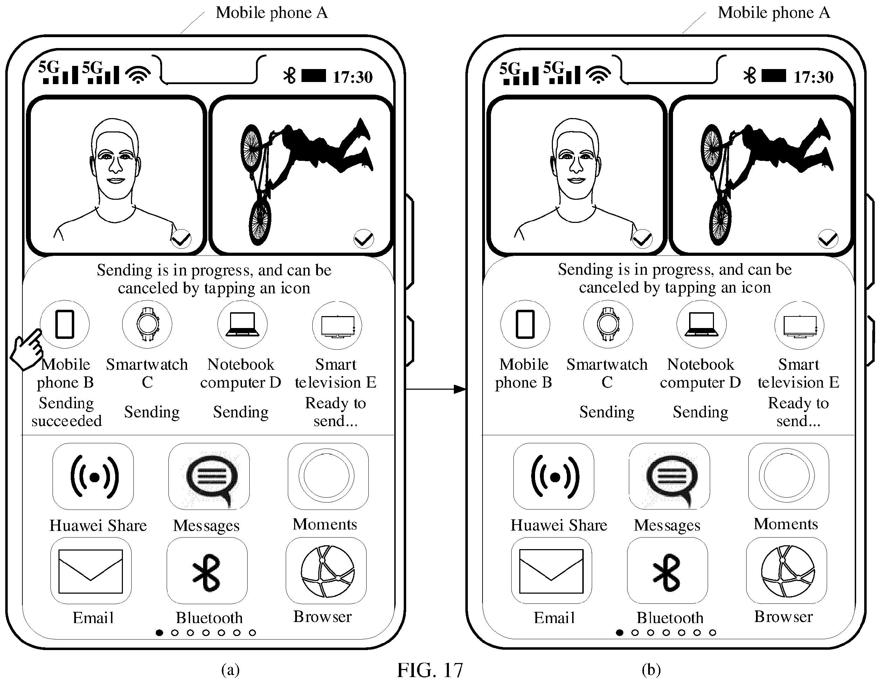

FIG. 17 is a schematic diagram depicting instances of other display interfaces of an electronic device according to an embodiment of this application;

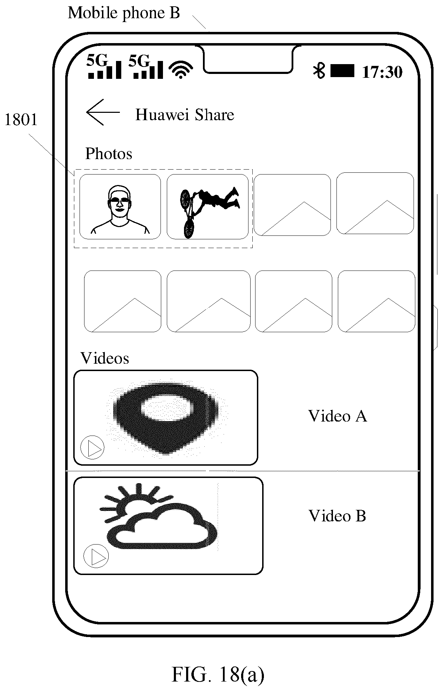

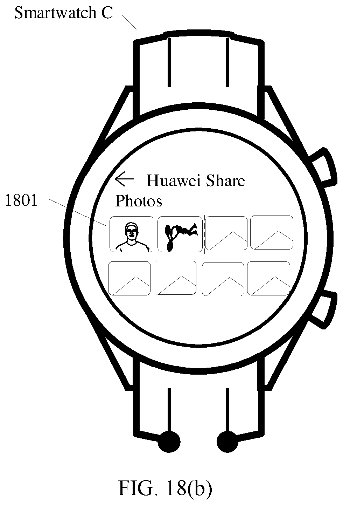

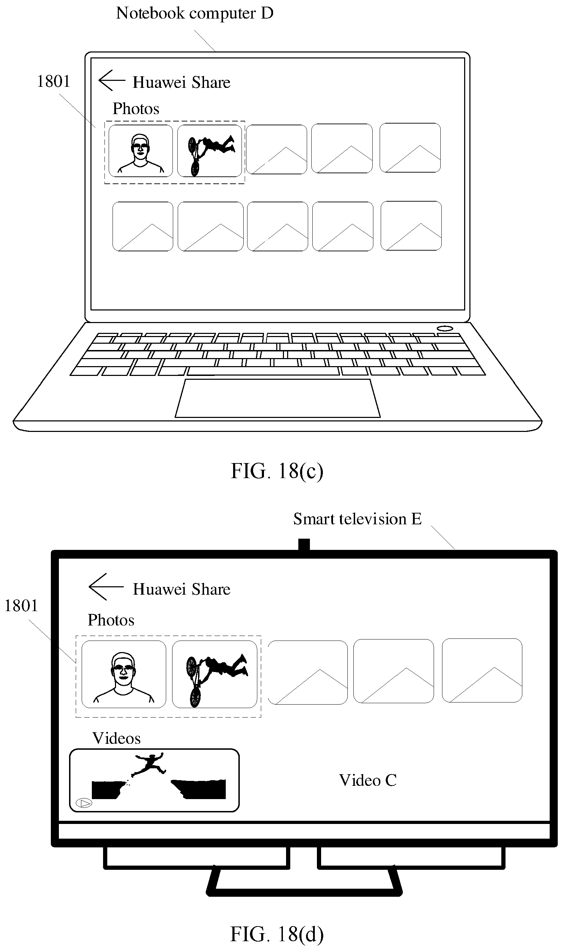

FIG. 18(a), FIG. 18(b), FIG. 18(c), and FIG. 18(d) are schematic diagrams of instances of other display interfaces of electronic devices according to an embodiment of this application; and

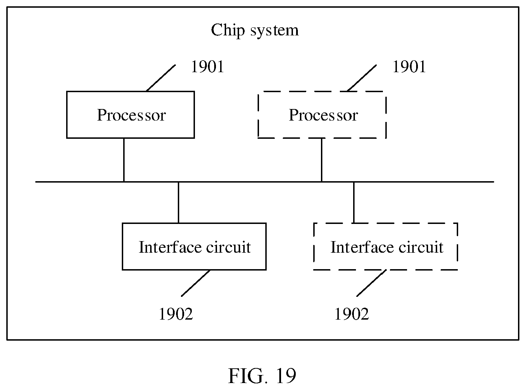

FIG. 19 is a schematic diagram of structural composition of a chip system according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In addition, the character "/" in this application generally indicates an "or" relationship between associated objects. For example, A/B may be understood as A or B.

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including", "having", and any other variant thereof in descriptions of this application are intended to cover non-exclusive inclusions. For example, a process, a method, a system, a product, or a device that includes a series of steps or modules is not limited to the listed steps or modules, but optionally further includes an unlisted step or module, or optionally further includes another inherent step or module of the process, the method, the product, or the device.

In addition, in embodiments of this application, the term "example" or "for example" is used to represent giving an example, an illustration, or a description. Any embodiment or design scheme described as an "example" or "for example" in this application should not be interpreted as being more preferred or more advantageous than another embodiment or design scheme. Exactly, use of the word such as "example" or "for example" is intended to present a concept in a specific manner.

Currently, when one electronic device shares a file (such as a picture, a document, or a video) with a plurality of electronic devices, the file can be shared among electronic devices through a mobile network. For example, electronic devices A, B, and C may create a group through social software, and transmit a file by using the group. In this way, each of the electronic devices A, B, and C can share a file stored by the electronic device with another electronic device. However, file traffic needs to be consumed to share a file through the mobile network, and a user needs to pay a traffic fee. In addition, a process of creating the group is also complex.

Currently, in order to reduce costs, a file may be shared by using the following three conventional technologies.

Conventional technology 1: The user may purchase cloud space by using an electronic device. A plurality of electronic devices may synchronize files stored in the electronic devices to the cloud space. In addition, each electronic device may store, in the electronic device, a file in the cloud space. However, in this solution, the user needs to purchase the cloud space, and costs are relatively high. In addition, each of the plurality of electronic devices needs to have a cloud account. In other words, if an electronic device does not support cloud account registration, the electronic device cannot share a file with another electronic device.

Conventional technology 2: A file stored in an electronic device (such as a mobile phone or a tablet) with relatively small storage space may be backed up to a personal computer (Personal Computer, PC). However, in this solution, the user needs to establish connections between a plurality of electronic devices and the PC. This involves complex operations.

Conventional technology 3: Files stored in a plurality of electronic devices may be backed up to a home storage device (such as a network attached storage (Network Attached Storage, NAS)). However, in this solution, the user cannot browse a backup file through the home storage device. Consequently, user experience of browsing file content is relatively poor.

In conclusion, file sharing efficiency cannot be improved in a relatively convenient sharing manner by using a current conventional technology.

Therefore, an embodiment of this application provides a file sharing method. This method is used by one electronic device (which may be referred to as a transmitting-end device) to share a file with a plurality of electronic devices (which may be referred to as receiving-end devices). Generally, the transmitting-end device may sequentially send a to-be-shared file to a plurality of receiving-end devices. However, in this method, not only the transmitting-end device may send the to-be-shared file to the receiving-end device, but also a receiving-end device that successfully receives the to-be-shared file may send the to-be-shared file to another receiving-end device. In this way, the transmitting-end device does not need to sequentially send the to-be-shared file to the plurality of receiving-end devices. This may reduce an amount of time used by the transmitting-end device to share the file with the plurality of receiving-end devices, and may improve file sharing efficiency.

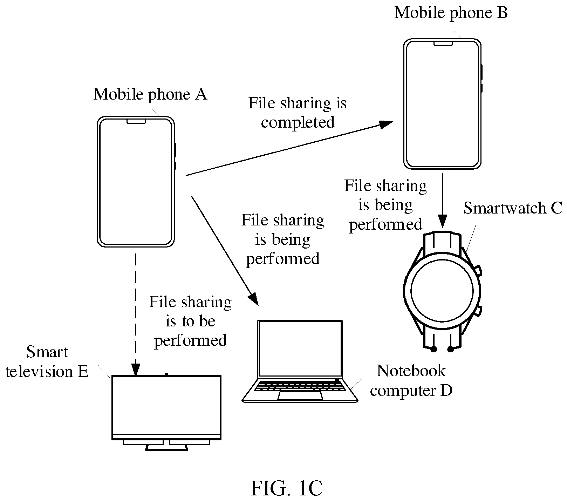

For example, the transmitting-end device is a mobile phone A shown in FIG. 1C, and the plurality of receiving-end devices include a mobile phone B, a smartwatch C, a notebook computer D, and a smart television E. In this solution, after the mobile phone A shares a to-be-shared file with the mobile phone B, the mobile phone A may send the to-be-shared file to the notebook computer D, and the mobile phone B sends the to-be-shared file to the smartwatch C.

For example, the electronic device in embodiments of this application may be a device such as a tablet, a mobile phone, a desktop electronic device, a laptop electronic device, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, or a vehicle-mounted device. A specific form of the electronic device is not specifically limited in embodiments of this application.

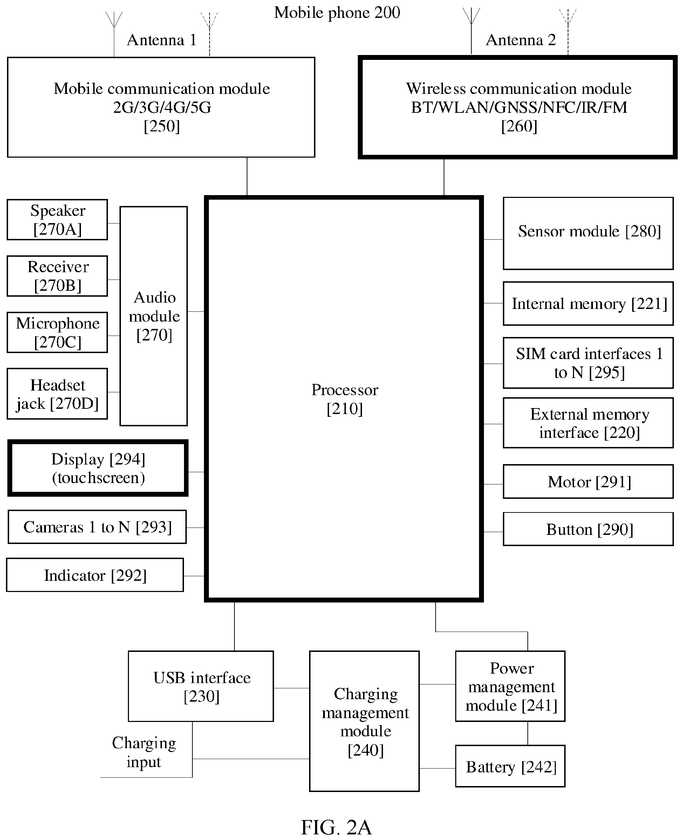

The file sharing method provided in this application may be performed by a file sharing apparatus, and the sharing apparatus may be the electronic device shown in FIG. 2A. In addition, the sharing apparatus may alternatively be a central processing unit (Central Processing Unit, CPU) of the electronic device, or a file sharing module in the electronic device. In this embodiment of this application, an example in which the electronic device performs the file sharing method is used to describe the file sharing method provided in this embodiment of this application.

Refer to FIG. 2A. In this application, an example in which the electronic device is a mobile phone 200 shown in FIG. 2A is used herein to describe the electronic device provided in this application. The mobile phone 200 may be the foregoing mobile phone A. It should be understood that the mobile phone 200 shown in FIG. 2A is merely an example of the electronic device. In addition, the mobile phone 200 may have more or fewer components than those shown in the figure, may combine two or more components, or may have different component configurations. Various components shown in the FIG. 2A may be implemented by using hardware that includes one or more signal processors and/or application-specific integrated circuits, software, or a combination of hardware and software.

As shown in FIG. 2A, the mobile phone 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like.

The sensor module 280 may include sensors such as a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the mobile phone 200. In some other embodiments of this application, the mobile phone 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural processing unit (neural processing unit, NPU), and/or the like. Different processing units may be independent components, or may be integrated into one or more processors.

The controller may be a nerve center and a command center of the mobile phone 200. The controller may generate an operation control signal based on instruction operation code and a time sequence signal, to control instruction fetching and instruction execution.

A memory may be further disposed in the processor 210, and is configured to store instructions and data. In some embodiments, the memory in the processor 210 is a cache. The memory may store instructions that have been just used or cyclically used by the processor 210, or data that has been just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on a structure of the mobile phone 200. In some other embodiments, the mobile phone 200 may alternatively use an interface connection manner different from that shown in this embodiment or use a combination of a plurality of interface connection manners.

The charging management module 240 is configured to receive a charging input from a charger. The charger may be a wireless charger or a wired charger. The charging management module 240 may further supply power to the electronic device through the power management module 241 while charging the battery 242.

The power management module 241 is configured to connect to the battery 242, the charging management module 240, and the processor 210. The power management module 241 receives an input of the battery 242 and/or the charging management module 240, to supply power to the processor 210, the internal memory 221, an external memory, the display 294, the camera 293, the wireless communication module 260, and the like. In some embodiments, the power management module 241 and the charging management module 240 may alternatively be disposed in a same component.

A wireless communication function of the mobile phone 200 may be implemented through the antenna 1, the antenna 2, the mobile communication module 250, the wireless communication module 260, the modem processor, the baseband processor, and the like. In some embodiments, in the mobile phone 200, the antenna 1 and the mobile communication module 250 are coupled, and the antenna 2 and the wireless communication module 260 are coupled, so that the mobile phone 200 can communicate with a network and another device by using a wireless communication technology. For example, in this embodiment of this application, the mobile phone 200 may send the foregoing to-be-shared file to another device by using a wireless communication technology.

The antenna 1 and the antenna 2 are configured to transmit and receive electromagnetic wave signals. Each antenna in the mobile phone 200 may be configured to cover one or more communication bands. Different antennas may be multiplexed to improve antenna utilization. For example, the antenna 1 may be multiplexed as a diversity antenna of a wireless local area network. In some other embodiments, an antenna may be used in combination with a tuning switch.

The mobile communication module 250 may provide a wireless communication solution that is applied to the mobile phone 200 and that includes 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation.

The mobile communication module 250 may further amplify a signal modulated by the modem processor, and convert the signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same component as at least some modules in the processor 210.

The wireless communication module 260 may provide a wireless communication solution that is applied to the mobile phone 200 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. For example, in this embodiment of this application, the mobile phone 200 may be connected to a Wi-Fi network by using the wireless communication module 260.

The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

The mobile phone 200 implements a display function by using the GPU, the display 294, the application processor, and the like. The GPU is a microprocessor for image processing, and is connected to the display 294 and the application processor. The GPU is configured to: perform mathematical and geometric calculation, and render an image. The processor 210 may include one or more GPUs that execute program instructions to generate or change display information.

The display 294 is configured to display an image, a video, or the like. The display 294 includes a display panel. For example, in this embodiment of this application, the display 294 may be configured to display a display interface of the foregoing electronic device, for example, a device sharing interface, a device searching interface, or a QR code scanning interface.

The mobile phone 200 may implement a photographing function by using the ISP, the camera 293, the video codec, the GPU, the display 294, the application processor, and the like. The ISP is configured to process data fed back by the camera 293. The camera 293 is configured to capture a static image or a video. In some embodiments, the mobile phone 200 may include one or N cameras 293, where N is a positive integer greater than 1.

The external memory interface 220 may be configured to connect to an external storage card, for example, a micro SD card, to extend a storage capability of the mobile phone 200. The external storage card communicates with the processor 210 through the external memory interface 220, to implement a data storage function. For example, a file such as music or a video is stored in the external storage card.

The internal memory 221 may be configured to store computer-executable program code, and the executable program code includes instructions. The processor 210 runs the instructions stored in the internal memory 221, to implement various function applications and data processing of the mobile phone 200. For example, in this embodiment of this application, the processor 210 may execute the instructions stored in the internal memory 221, and the internal memory 221 may include a program storage area and a data storage area.

The program storage area may store an operating system, an application required by at least one function (for example, a sound playing function or an image playing function), and the like. The data storage area may store data (for example, audio data or a phone book) created during use of the mobile phone 200, and the like. In addition, the internal memory 221 may include a high-speed random access memory, and may further include a nonvolatile memory, for example, at least one magnetic disk storage device, a flash memory, a universal flash storage (universal flash storage, UFS).

The mobile phone 200 may implement an audio function, for example, music playing and recording, by using the audio module 270, the speaker 270A, the receiver 270B, the microphone 270C, the headset jack 270D, the application processor, and the like.

The button 290 includes a power button, a volume button, or the like. The button 290 may be a mechanical button, or a touch button. The motor 291 may generate a vibration prompt. The motor 291 may be configured to provide an incoming call vibration prompt and a touch vibration feedback. The indicator 292 may be an indicator light, and may be configured to indicate a charging status and a power change, or may be configured to indicate a message, a missed call, a notification, or the like. The SIM card interface 295 is configured to connect to a SIM card. A SIM card may be inserted into the SIM card interface 295 or removed from the SIM card interface 295, to be in contact with or separated from the mobile phone 200. The mobile phone 200 may support one or N SIM card interfaces, where N is a positive integer greater than 1. The SIM card interface 295 may support a nano-SIM card, a micro-SIM card, a SIM card, and the like.

Although not shown in FIG. 2A, the mobile phone 200 may further include a flash, a micro projection apparatus, a near field communication (Near Field Communication, NFC) apparatus, and the like. Details are not described herein.

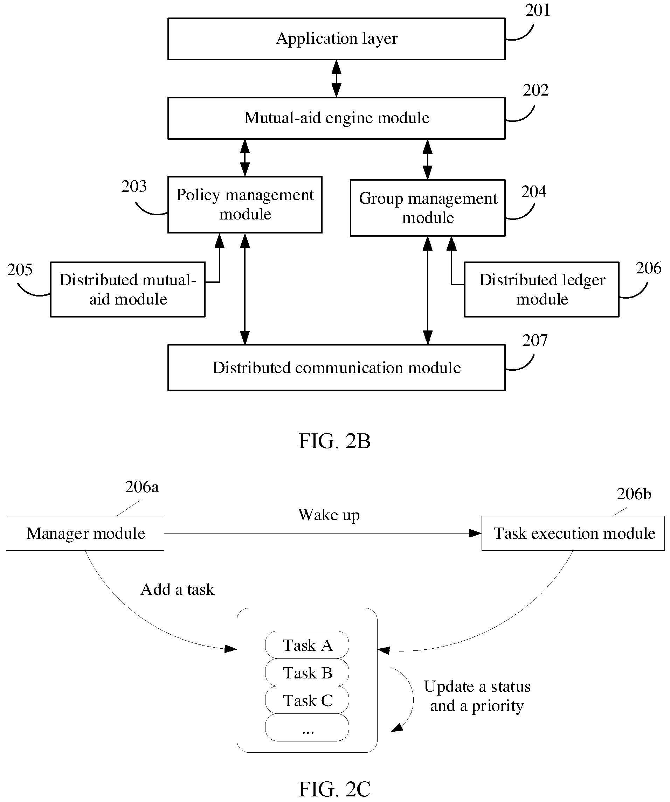

After a hardware structure of the electronic device is described, this application uses an example in which the electronic device is the mobile phone 200 and divides the mobile phone 200 into a plurality of functional modules to describe a system architecture of the electronic device. As shown in FIG. 2B, the mobile phone 200 includes an application layer 201, a mutual-aid engine module 202, a policy management module 203, a group management module 204, a distributed mutual-aid module 205, a distributed ledger module 206, and a distributed communication module 207.

The application layer 201 may include a series of application packages. For example, the application packages may include applications such as Camera, Gallery, Calendar, Phone, Maps, Navigation, WLAN, Bluetooth, Music, Videos, and Messages. In this embodiment of this application, the application packages may further include an application used to share a file, for example, Huawei Share.

The mutual-aid engine module 202 may provide a communication channel or a communication interface between the application layer 201 and lower layers (such as the policy management module 203 and the group management module 204). For example, the mutual-aid engine module 202 may receive a control instruction from the application layer 201, and transmit the control instruction to the lower layer, to instruct the lower layer to execute a corresponding control event. The mutual-aid engine module 202 may further receive an execution result that is of the control event and that is fed back by the lower layer, and feed back the result to the application layer 201. The mutual-aid engine module 202 may be further configured to implement a function of clearing related data (such as a ledger or a device list) in this embodiment of this application.

The policy management module 203 is configured to: if the mobile phone 200 fails to receive a to-be-shared file when the mobile phone 200 serves as a receiving-end device, trigger the mobile phone 200 to obtain the to-be-shared file from another electronic device that has the to-be-shared file. The policy management module 203 may be further configured to: if a receiving-end device fails to receive the to-be-shared file when the mobile phone 200 serves as a transmitting-end device, trigger the mobile phone 200 to indicate another electronic device that has the to-be-shared file to send the to-be-shared file to the receiving-end device that fails to receive the to-be-shared file. The another electronic device that has the to-be-shared file may be the transmitting-end device, or may be a receiving-end device that has successfully received the to-be-shared file.

The group management module 204 is configured to create and maintain a sharing group. The sharing group includes a transmitting-end device and a plurality of receiving-end devices. The sharing group is a group that is based on a physical link (such as a Bluetooth connection or a Wi-Fi connection). For example, when a user chooses to share a file with a plurality of receiving-end devices (such as four receiving-end devices) on the transmitting-end device, a sharing group including the transmitting-end device and the four receiving-end devices may be created. The sharing group has a short validity period. When each receiving-end device successfully receives the to-be-shared file, the sharing group is dissolved. When a member (such as the receiving-end device or the transmitting-end device) in the sharing group changes (for example, a network is disconnected, the member leaves the sharing group, the member is removed from the sharing group, or a new member is added), the group management module 204 may trigger another member in the sharing group to update the sharing group.

The distributed ledger module 206 is configured to maintain a ledger for file sharing between members in the sharing group. The ledger records record information about file sharing between members in the sharing group. For example, as shown in FIG. 2C, the distributed ledger module 206 includes a manager module 206a and a task execution module 206b. The manager module 206a may initiate a plurality of tasks, manage and schedule the tasks, and update statuses and priorities of the tasks. For example, as shown in FIG. 2C, tasks managed by the manager module 206a include a task A (for example, a task for generating record information), a task B (a task for deleting record information), and a task C. The manager module 206a may further wake up the task execution module 206b, that is, indicate the task execution module 206b to monitor a plurality of tasks and execute tasks.

The distributed mutual-aid module 205 is configured to: implement a mutual-aid function of sharing a file between electronic devices, and maintain a file state (for example, a reception success or a reception failure) in each file mutual-aid process. The mutual-aid function is specifically understood as: after a receiving-end device fails to receive a file, another electronic device that has the to-be-shared file may share the file with the receiving-end device. For example, the distributed mutual-aid module 205 may indicate an electronic device that has the to-be-shared file to send the to-be-shared file to an electronic device that does not have the to-be-shared file.

The distributed communication module 207 is configured to implement a function of interaction of data, signaling, or the like between the mobile phone 200 and another electronic device. In addition, the distributed communication module 207 can discover another electronic device (for example, discover whether the another electronic device has enabled a Bluetooth function).

All methods in the following embodiments may be implemented in an electronic device having the foregoing hardware structure and system architecture. For example, in this embodiment of this application, the method in this embodiment of this application is described by using an example in which a transmitting-end device is a mobile phone A shown in FIG. 1C, and a plurality of receiving-end devices include a mobile phone B, a smartwatch C, a notebook computer D, and a smart television E that are shown in FIG. 1C. The mobile phone A stores a to-be-shared file, and the to-be-shared file may include one or more files. For example, the to-be-shared file may include a video. For another example, the to-be-shared file may include three songs. For still another example, the to-be-shared file may include two photos. In the following embodiment, an example in which the to-be-shared file includes two photos is used to describe the method in this embodiment of this application.

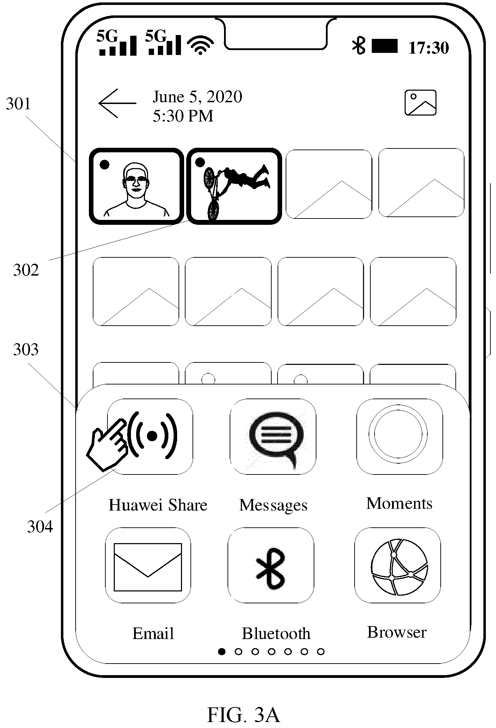

Before performing the method (steps 1 to 6 shown in FIG. 3A) in this embodiment of this application, the mobile phone A may determine the to-be-shared file in response to a selection operation performed by a user on a file on a file interface. For example, the mobile phone A may display an interface including a plurality of files, and then receive a selection operation performed by the user on some of the plurality of files. In response to the selection operation performed by the user, the mobile phone A may display a selected file in a manner different from another file. As shown in FIG. 3A, photos 301 and 302 are selected files.

Then, the mobile phone A may further determine a sharing manner for the to-be-shared file in response to the operation performed by the user. The sharing manner may be an application (such as Huawei Share, Messages, or Email) used to share the to-be-shared file, a wireless connection (such as Bluetooth or Wi-Fi) used to share the to-be-shared file, or the like. For example, in response to the operation performed by the user, the mobile phone A may display a sharing manner selection window 303 shown in FIG. 3A. The sharing manner selection window 303 includes icons for a plurality of sharing manners, such as a Huawei Share icon 304, an information icon, and a Bluetooth icon. The mobile phone A may receive a selection operation performed by the user on an icon of any sharing manner, perform the method in this embodiment of this application, and share the to-be-shared file in the sharing manner.

It should be noted that, in response to the operation performed by the user, the mobile phone A may alternatively determine the sharing manner first, and then determine the to-be-shared file. This is not limited in this embodiment of this application. In the following embodiment, an example in which the mobile phone A shares a file with a plurality of receiving-end devices through Huawei Share is used to describe the method in this embodiment of this application.

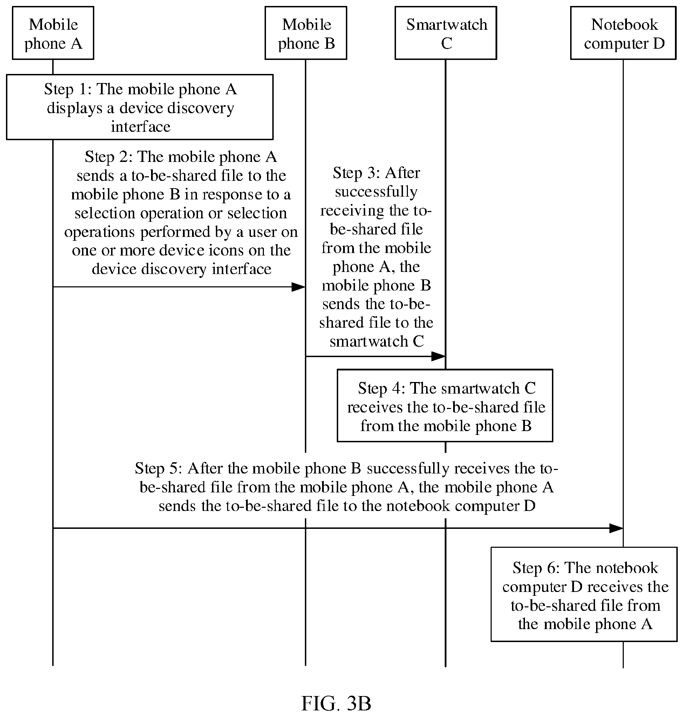

An embodiment of this application provides a file sharing method. As shown in FIG. 3B, the sharing method may include steps 1 to 6.

Step 1: The mobile phone A displays a device discovery interface. The device discovery interface includes icons of a mobile phone B, a smartwatch C, a notebook computer D, a smart television E, and a mobile phone F.

For example, after the mobile phone A detects that a user selects a sharing manner (for example, detects a selection operation performed by the user on a Huawei Share icon), the mobile phone A may display a device discovery interface 401. The device discovery interface 401 includes the icons of the mobile phone B, the smartwatch C, the notebook computer D, the smart television E, and the mobile phone F.

It should be noted that, Wi-Fi and Bluetooth functions of a plurality of electronic devices need to be enabled to share a file among the plurality of electronic devices through Huawei Share. In this way, it can be ensured that the file can be shared among the plurality of electronic devices through Huawei Share.

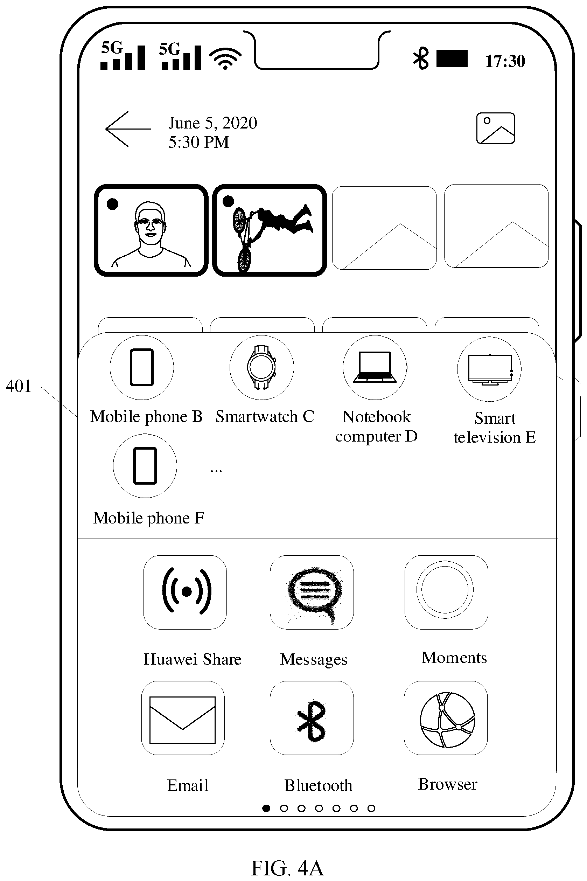

For example, the mobile phone A may search for an electronic device that is connected to a same Wi-Fi network as the mobile phone A and whose Bluetooth function is enabled around the mobile phone A. As shown in FIG. 4A, for example, candidate devices found by the mobile phone A include the mobile phone B, the smartwatch C, the notebook computer D, the smart television E, and the mobile phone F. The user may select, from the mobile phone B, the smartwatch C, the notebook computer D, the smart television E, and the mobile phone F, one or more receiving-end devices with which a file is to be shared by the mobile phone A this time.

It should be noted that the "mobile phone B", the "smartwatch C", the "notebook computer D", and the "smart television E" may be represented by device identifiers, account identification numbers (Identity document, ID) of users, or aliases (such as "Zhang San" and "Hahaha") of the devices. This is not limited in this embodiment of this application.

It should be noted that the device discovery interface displayed by the mobile phone A may include an icon of an electronic device discovered by the mobile phone A through Bluetooth. The electronic device and the mobile phone A may be connected to a same local area network or different local area networks. Alternatively, the device discovery interface displayed by the mobile phone A may include an icon of an electronic device that is discovered by the mobile phone A through Bluetooth and that is connected to a same local area network as the mobile phone A. In this embodiment of this application, the mobile phone A may detect, through distributed middleware, an electronic device that is connected to a same local area network (for example, a same Wi-Fi network) as the mobile phone A.

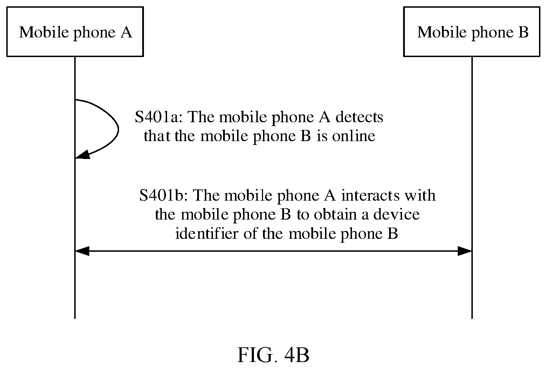

For example, in this embodiment of this application, a specific manner in which the mobile phone A discovers an electronic device around the mobile phone A is described by using an example in which the mobile phone A discovers the mobile phone B, both the mobile phone A and the mobile phone B have enabled Wi-Fi, and the mobile phone A and the mobile phone B are connected to a same Wi-Fi network. As shown in FIG. 4B, the foregoing step 1 may include S401a and S401b.

S401a: The mobile phone A detects that the mobile phone B is online.

In some embodiments, both the mobile phone A and the mobile phone B have enabled the Bluetooth function. In response to the selection operation performed by the user on the Huawei Share icon, the mobile phone A may detect that the mobile phone B has enabled the Bluetooth function. In other words, the mobile phone B is online.

The mobile phone B may broadcast a Bluetooth message. After receiving the Bluetooth message broadcast by the mobile phone B, the mobile phone A may determine that the mobile phone B has enabled the Bluetooth function.

In some other embodiments, the mobile phone A has not enabled the Bluetooth function, but the mobile phone B has enabled the Bluetooth function. The mobile phone A may automatically enable the Bluetooth function in response to the selection operation performed by the user on the Huawei Share icon. Then, the mobile phone A may detect that the mobile phone B has enabled the Bluetooth function.

In some other embodiments, the mobile phone A has not enabled the Bluetooth function, but the mobile phone B has enabled the Bluetooth function. The mobile phone A may send first prompt information in response to the selection operation performed by the user on the Huawei Share icon. The first prompt information is used to prompt the user whether to enable a Bluetooth function of the mobile phone A. The first prompt information includes an enable option and a disable option. The enable option is used to indicate the mobile phone A to enable the Bluetooth function, and the disable option is used to indicate the mobile phone A not to enable the Bluetooth function. The mobile phone A may display the first prompt information through a notification message, a notification bar, or the like. This is not limited in this embodiment of this application.

Subsequently, the mobile phone A may enable the Bluetooth function in response to a selection operation performed by the user on the enable option in the first prompt information. Then, the mobile phone A may detect that the mobile phone B has enabled the Bluetooth function.

S401b: The mobile phone A interacts with the mobile phone B to obtain a device identifier of the mobile phone B.

The mobile phone A may send an address request message to the mobile phone B. The address request message is used to indicate the mobile phone B to send the device identifier to the mobile phone A. The device identifier is used to identify an electronic device. For example, the device identifier may be a Bluetooth media access control (Media Access Control, MAC) address. After receiving the address request message from the mobile phone A, the mobile phone B may send the device identifier to the mobile phone A. For example, the mobile phone B may send an address response message to the mobile phone A, where the address response message includes the device identifier (such as a Bluetooth MAC address) of the mobile phone B. The mobile phone A may receive the device identifier from the mobile phone B. In this way, the mobile phone A may display a device discovery interface that includes the device identifier of the mobile phone B.

It should be noted that, reference may be made to S401a and S401b for processes in which the mobile phone A discovers other electronic devices, for example, processes in which the mobile phone A discovers the smartwatch C, the notebook computer D, the smart television E, and the mobile phone F. Details are not described herein.

It may be understood that, after the mobile phone A discovers the mobile phone B, the smartwatch C, the notebook computer D, the smart television E, and the mobile phone F, the mobile phone A may perform the method in this embodiment of this application to share the to-be-shared file.

Step 2: The mobile phone A sends the to-be-shared file to the mobile phone B in response to a selection operation or selection operations performed by the user on one or more device icons on the device discovery interface.

In this embodiment of this application, the mobile phone A may send the to-be-shared file to the mobile phone B in the following implementation (a) or implementation (b) in response to the selection operation or the selection operations performed by the user on the one or more device icons on the device discovery interface.

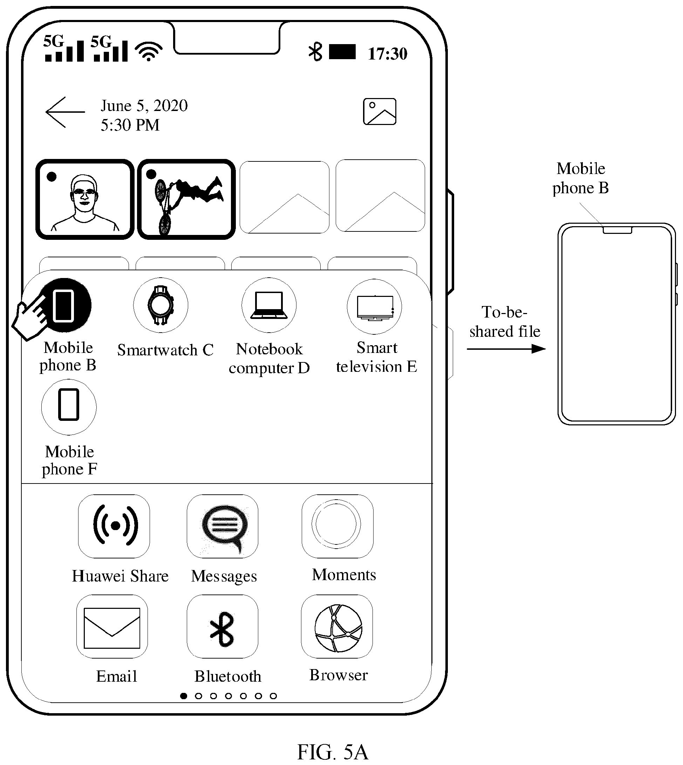

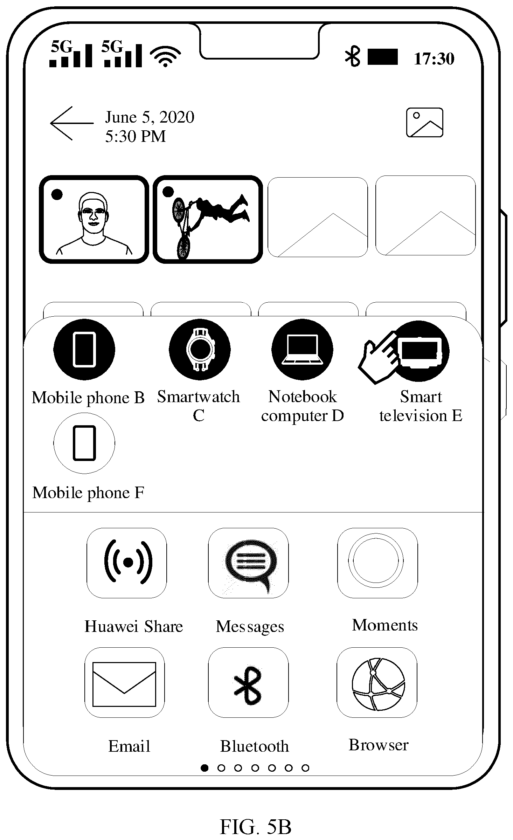

Implementation (a): After receiving a selection operation performed by the user on any device icon (such as a device icon, shown in FIG. 5A, of the mobile phone B) on the device discovery interface, the mobile phone A may send the to-be-shared file to an electronic device (such as the mobile phone B) corresponding to the device icon. Then, in a process in which the mobile phone A sends the to-be-shared file to the mobile phone B, as shown in FIG. 5B, the mobile phone A may further sequentially receive selection operations performed by the user on a plurality of other device icons (such as device icons of the smartwatch C, the notebook computer D, and the smart television E).

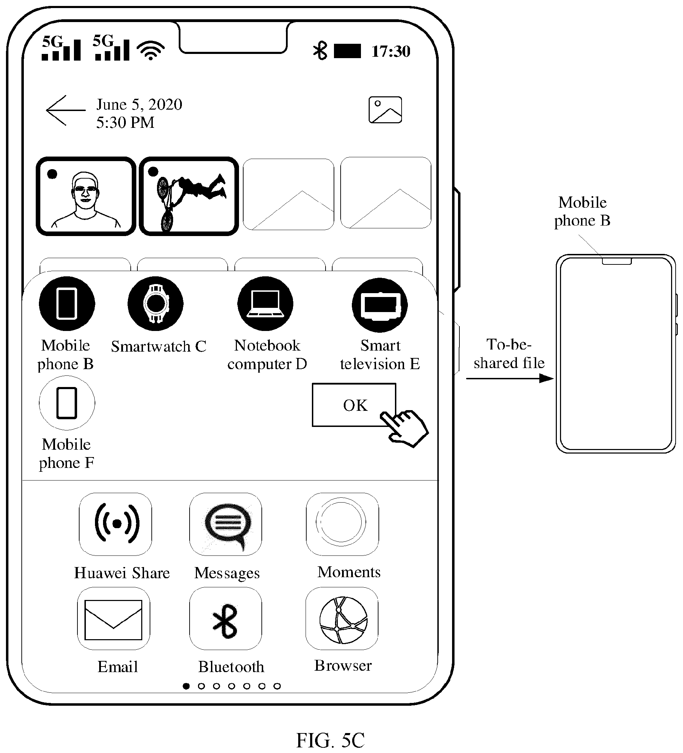

Implementation (b): After receiving selection operations performed by the user on device icons (such as device icons, shown in FIG. 5C, of the mobile phone B, the smartwatch C, the notebook computer D, and the smart television E) on the device discovery interface, the mobile phone A does not immediately send the to-be-shared file to electronic devices (such as the mobile phone B) corresponding to the device images. Instead, after receiving a preset operation performed by the user (for example, a tap operation performed by the user on an "OK" button shown in FIG. 5C), the mobile phone A first sends, based on a sequence in which the user selects the foregoing device icons, the to-be-shared file to an electronic device (such as the mobile phone B shown in FIG. 5C) corresponding to a device icon that is first selected by the user.

Generally, the mobile phone A sequentially sends the to-be-shared file to the smartwatch C, the notebook computer D, and the smart television E after successfully sending the to-be-shared file to the mobile phone B. However, in this embodiment of this application, after successfully receiving the to-be-shared file from the mobile phone A, the mobile phone B may serve as a sharer to send the to-be-shared file to the smartwatch C, the notebook computer D, or the smart television E. Specifically, after Step 2, the method in this embodiment of this application further includes Step 3.

In some embodiments, in a process in which the mobile phone A sends the to-be-shared file to the mobile phone B, the mobile phone A may send second prompt information, where the second prompt information is used to indicate that the mobile phone A is sending the to-be-shared file to the mobile phone B.

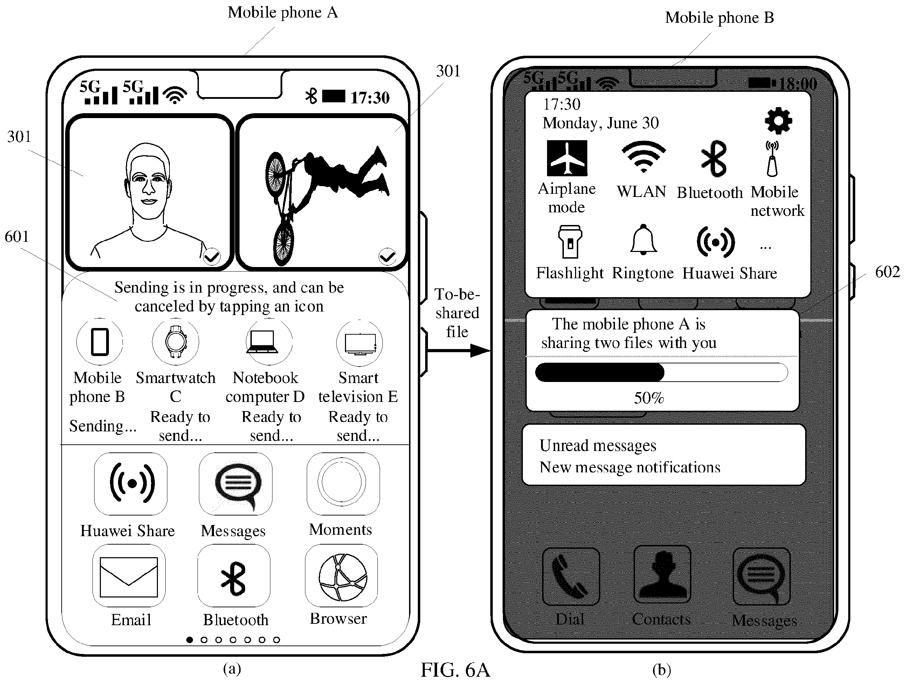

For example, the mobile phone A may display second prompt information 601 shown in (a) in FIG. 6A. For example, the second prompt information 601 is "Sending is in progress, and can be canceled by tapping an icon". The second prompt information 601 may be further used to prompt the user that a device icon of a corresponding receiving-end device may be tapped to cancel the sending.

Optionally, in a process in which the mobile phone A sends the to-be-shared file to the mobile phone B in response to the selection operation or the selection operations performed by the user on the one or more device icons on the device discovery interface, the mobile phone A may display transmission state information of transmitting the to-be-shared file to all receiving-end devices. The transmission state information may include at least one piece of the following information: first state information, second state information, third state information, and fourth state information. The first state information is used to indicate that the to-be-shared file is being sent to a corresponding receiving-end device. The second state information is used to indicate that the to-be-shared file is ready to be sent to a corresponding receiving-end device. The third state information is used to indicate that a corresponding receiving-end device has successfully received the to-be-shared file. The fourth state information is used to indicate that a corresponding receiving-end device fails to receive the to-be-shared file. As shown in (a) in FIG. 6A, the mobile phone A may further display the transmission state information of all receiving-end devices. The transmission state information may include at least one piece of the following information: "Sending" (that is, the first state information), "Ready to send" (that is, the second state information), "Sending succeeded" (that is, the third state information), and "Sending failed" (that is, the fourth state information). For example, transmission state information of the mobile phone B is "Sending", and transmission state information of the smartwatch C, the notebook computer D, and the smart television E is "Ready to send".

In some embodiments, in the process in which the mobile phone A sends the to-be-shared file to the mobile phone B, the mobile phone B may send third prompt information, where the third prompt information is used to indicate progress of receiving the to-be-shared file from the mobile phone A by the mobile phone B. The mobile phone B may display third prompt information 602 shown in (b) in FIG. 6A. For example, the third prompt information 602 is "The mobile phone A is sharing two files with you". The third prompt information 602 may further include progress information of sharing the file with the mobile phone B by the mobile phone A. The progress information may be a percentage of the file that is shared by the mobile phone A and that has been received by the mobile phone B. For example, the progress information may be presented by a progress bar shown in (b) in FIG. 6A.

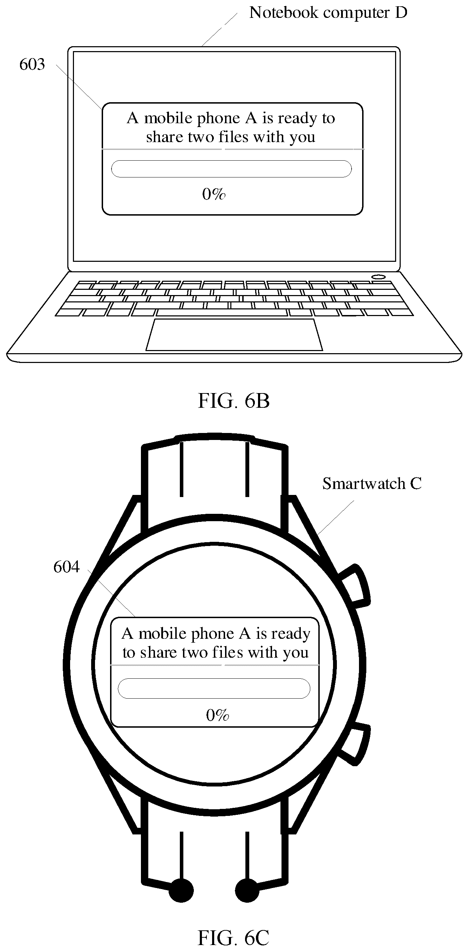

In some embodiments, in the process in which the mobile phone A sends the to-be-shared file to the mobile phone B, the mobile phone A does not send the to-be-shared file to other receiving-end devices. The other receiving-end devices (such as the smartwatch C, the notebook computer D, and the smart television E) may send fourth prompt information, where the fourth prompt information is used to indicate the receiving-end device to be ready to receive the to-be-shared file. For example, in the process in which the mobile phone A sends the to-be-shared file to the mobile phone B, the mobile phone A does not send the to-be-shared file to the notebook computer D and the smartwatch C. The notebook computer D may display fourth prompt information 603 shown in FIG. 6B, and the smartwatch C may display fourth prompt information 604 shown in FIG. 6C. For example, the fourth prompt information is "A mobile phone A is ready to share two files with you". The fourth prompt information 603 and the fourth prompt information 604 each may further include progress information of receiving the to-be-shared file. The progress information may be a percentage of the file that is shared by the mobile phone A and that has been received by the receiving-end device. For example, the progress information may be presented by a progress bar shown in FIG. 6B.

In some other embodiments, in the process in which the mobile phone A sends the to-be-shared file to the mobile phone B, another receiving-end device (such as the smartwatch C) may not send the fourth prompt information, but displays corresponding prompt information after a device that has the to-be-shared file starts to send the to-be-shared file to the receiving-end device.

Step 3: After successfully receiving the to-be-shared file from the mobile phone A, the mobile phone B sends the to-be-shared file to the smartwatch C.

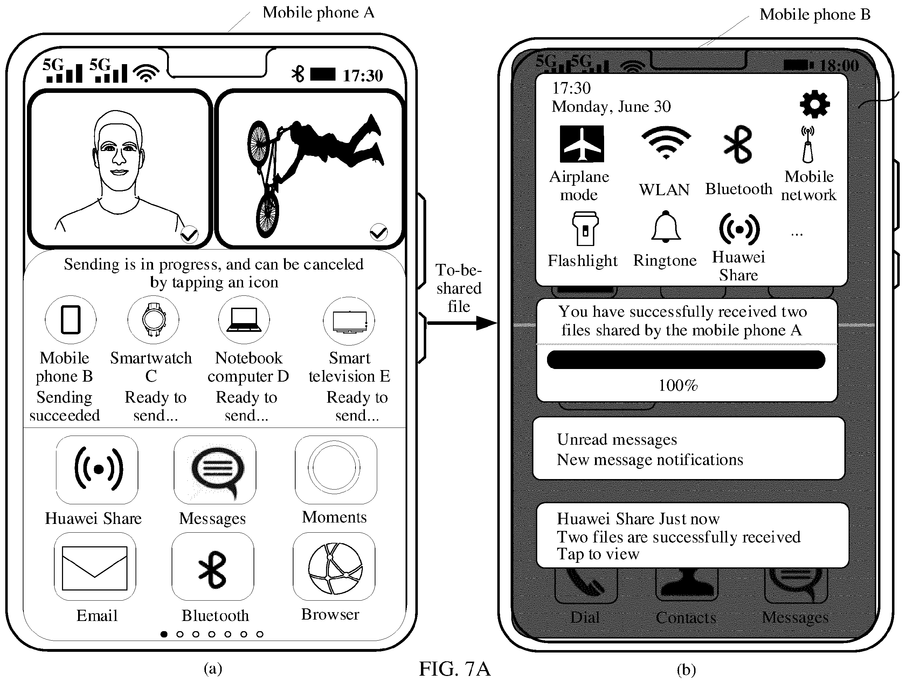

For example, when the mobile phone B successfully receives the to-be-shared file from the mobile phone A, transmission state information that is of each receiving-end device and that is displayed by the mobile phone A changes. For example, when the mobile phone B successfully receives the to-be-shared file from the mobile phone A, the transmission state information of the mobile phone B changes from "Sending" shown in (a) in FIG. 6A to "Sending succeeded" shown in (a) in FIG. 7A. Correspondingly, the third prompt information of the mobile phone B may be updated from "The mobile phone A is sharing two files with you" shown in (b) in FIG. 6A to "You have successfully received two files shared by the mobile phone A" shown in (b) in FIG. 7A, and the progress bar is updated from 50% shown in (b) in FIG. 6A to 100% shown in (b) in FIG. 7A.

After successfully receiving the to-be-shared file from the mobile phone A, the mobile phone B may send the to-be-shared file to the smartwatch C in the following implementation (1), implementation (2), and implementation (3).

Implementation (1): After the mobile phone B successfully receives the to-be-shared file from the mobile phone A, the mobile phone B may actively send the to-be-shared file to the smartwatch C.

Implementation (2): After successfully receiving the to-be-shared file from the mobile phone A, the mobile phone B may send a first indication message (which may also be referred to as the first indication message) to the mobile phone A. The first indication message is used to indicate that the mobile phone B successfully receives the to-be-shared file from the mobile phone A. After receiving the first indication message, the mobile phone A may indicate the mobile phone B to send the to-be-shared file to the smartwatch C.

Implementation (3): After successfully receiving the to-be-shared file from the mobile phone A, the mobile phone B receives a file request 1 from the smartwatch C. The file request 1 is used to request to obtain the to-be-shared file from the mobile phone B.

After successfully receiving the to-be-shared file from the mobile phone A, the mobile phone B may broadcast the first indication message. The first indication message is used to indicate that the mobile phone B successfully receives the to-be-shared file from the mobile phone A.

In a manner, after the mobile phone B successfully receives the to-be-shared file from the mobile phone A, the mobile phone A may indicate the smartwatch C to obtain the to-be-shared file from the mobile phone B. Specifically, after receiving the first indication message, the mobile phone A may indicate the smartwatch C to obtain the to-be-shared file from the mobile phone B.

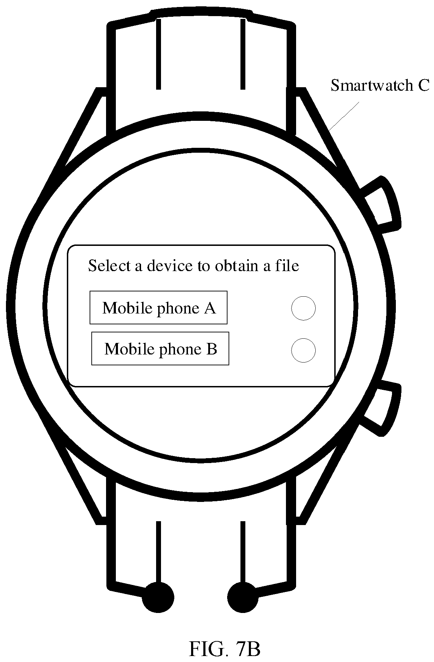

In another manner, after receiving the first indication message, the smartwatch C may actively obtain the to-be-shared file from an electronic device (such as the mobile phone B) that has the to-be-shared file. Certainly, the smartwatch C may alternatively obtain the to-be-shared file from the mobile phone A. In this embodiment of this application, the smartwatch C may request the user to determine whether the mobile phone A or the mobile phone B sends the to-be-shared file to the smartwatch C. For example, after receiving the first indication message, the smartwatch C may display a device selection interface shown in FIG. 7B. The device selection interface includes an identifier of the mobile phone A and an identifier of the mobile phone B. The smartwatch C may receive a selection operation performed by the user on an identifier of either device in the device selection interface shown in FIG. 7B, and actively request a device selected by the user to send the to-be-shared file to the smartwatch C. Alternatively, the smartwatch C may randomly select an electronic device (such as the mobile phone B) that has the to-be-shared file, to obtain the to-be-shared file. This is not limited in this embodiment of this application.

Reference may be made to detailed descriptions in the following embodiments for a specific manner in which the mobile phone B sends the first indication message to the mobile phone A after successfully receiving the to-be-shared file from the mobile phone A, and specific implementations of the implementation (1), the implementation (2), and the implementation (3) in which the mobile phone B sends the to-be-shared file to the smartwatch C. Details are not described herein.

Step 4: The smartwatch C receives the to-be-shared file from the mobile phone B.

Step 5: After the mobile phone B successfully receives the to-be-shared file from the mobile phone A, the mobile phone A sends the to-be-shared file to the notebook computer D.

Step 6: The notebook computer D receives the to-be-shared file from the mobile phone A.

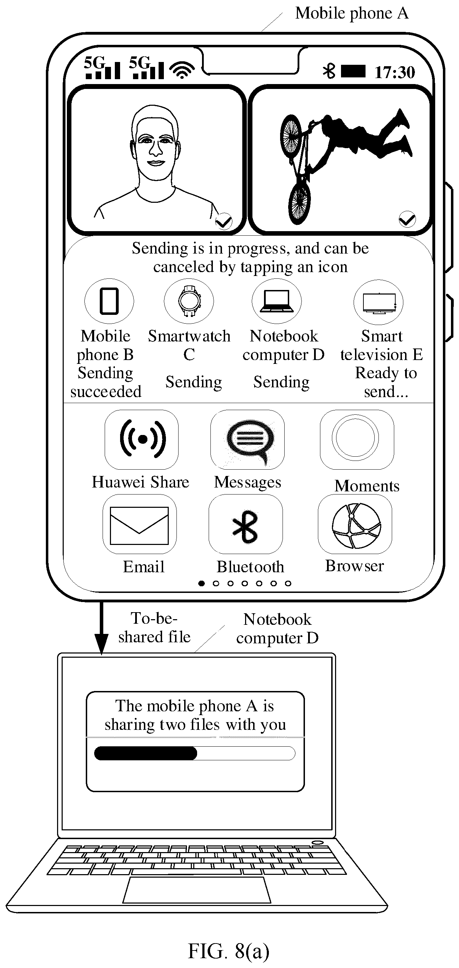

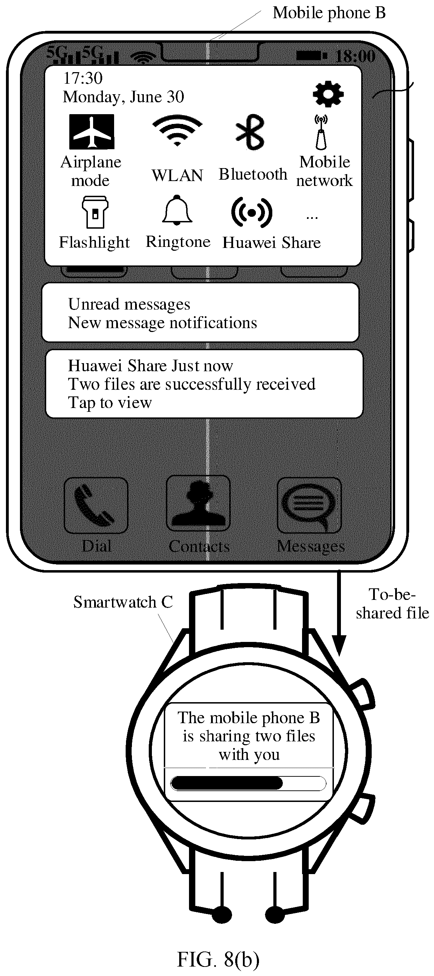

For example, after the mobile phone A sends the to-be-shared file to the mobile phone B, the smartwatch C receives the to-be-shared file from the mobile phone B, and the notebook computer D receives the to-be-shared file from the mobile phone A. The transmission state information and the fourth prompt information of the smartwatch C change, and the transmission state information and the fourth prompt information of the notebook computer D change. As shown in FIG. 8(a) and FIG. 8(b), when the mobile phone A sends the to-be-shared file to the notebook computer D, and the mobile phone B sends the to-be-shared file to the smartwatch C, the transmission state information of the notebook computer D changes from "Ready to send" shown in (a) in FIG. 6A to "Sending" shown in FIG. 8(a). The fourth prompt information of the notebook computer D changes from "A mobile phone A is ready to share two files with you" shown in FIG. 6B to "The mobile phone A is sharing two files with you" (that is, the first prompt message) shown in FIG. 8(a). The transmission state information of the smartwatch C changes from "Ready to send" shown in (a) in FIG. 6A to "Sending" shown in FIG. 8(a). The fourth prompt information of the smartwatch C changes from "A mobile phone A is ready to share two files with you" shown in FIG. 6C to "The mobile phone A is sharing two files with you" (that is, a second prompt message) shown in FIG. 8(b).

It should be noted that the mobile phone A or a receiving-end device (such as the mobile phone B in Step 3) that successfully receives the to-be-shared file sends, based on a sequence in which the user selects device icons on the device discovery interface, the to-be-shared file to electronic devices corresponding to the device icons.

After Step 4 and Step 6, if the smartwatch C successfully receives the to-be-shared file from the mobile phone B, and the notebook computer D successfully receives the to-be-shared file from the mobile phone A, any one of the notebook computer D, the smartwatch C, the mobile phone B, or the mobile phone A may send the to-be-shared file to the smart television E. For a specific manner in which the notebook computer D, the smartwatch C, the mobile phone B, or the mobile phone A sends the to-be-shared file to the smart television E, reference may be made to the method used by an electronic device that has the to-be-shared file to send the to-be-shared file to the smartwatch C in the foregoing embodiment.

It may be understood that, after the mobile phone B successfully receives the file, the mobile phone B may also share the file with the smartwatch C when the mobile phone A shares the file with the notebook computer D. In this way, in this embodiment of this application, a plurality of electronic devices (such as the mobile phone A and the mobile phone B) may send the to-be-shared file to a plurality of receiving-end devices at the same time. Therefore, file sharing efficiency is improved.

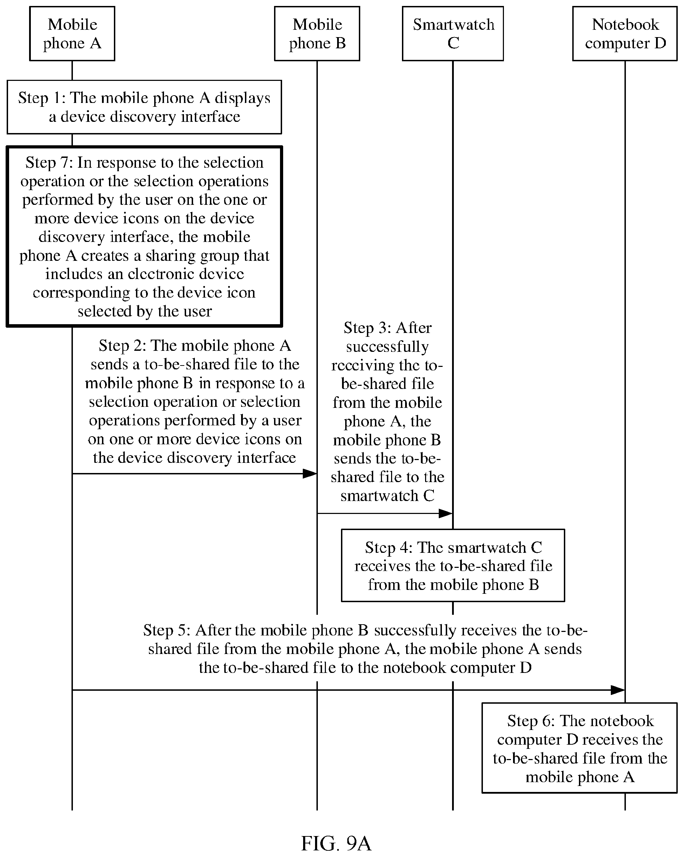

After Step 1, the mobile phone A not only may perform Step 2, but also may perform Step 7 to create a sharing group that includes a device corresponding to the device icon selected by the user. Specifically, as shown in FIG. 9A, the method in this embodiment of this application may further include Step 7.

Step 7: In response to the selection operation or the selection operations performed by the user on the one or more device icons on the device discovery interface, the mobile phone A creates the sharing group that includes an electronic device corresponding to the device icon selected by the user.

The sharing group includes a transmitting-end device (such as the mobile phone A) and receiving-end devices (such as the mobile phone B, the smartwatch C, the notebook computer D, and the smart television E) corresponding to the device icons selected by the user.

In the foregoing implementation (a), after detecting that the user selects a first device icon on the device discovery interface, the mobile phone A may create a sharing group that includes the mobile phone A and a device (such as the mobile phone B) corresponding to the device icon. Then, each time the mobile phone A detects that the user selects a device icon on the device discovery interface, the mobile phone A may add a device corresponding to the device icon to the sharing group.

In the foregoing implementation (b), after receiving the preset operation performed by the user on the device discovery interface, the mobile phone A may generate a sharing group that includes the mobile phone A and devices (such as the mobile phone B, the smartwatch C, the notebook computer D, and the smart television E) corresponding to a plurality of device icons selected by the user. In other words, after receiving the preset operation, the mobile phone A may generate a sharing group that includes the mobile phone A and a plurality of receiving-end devices.

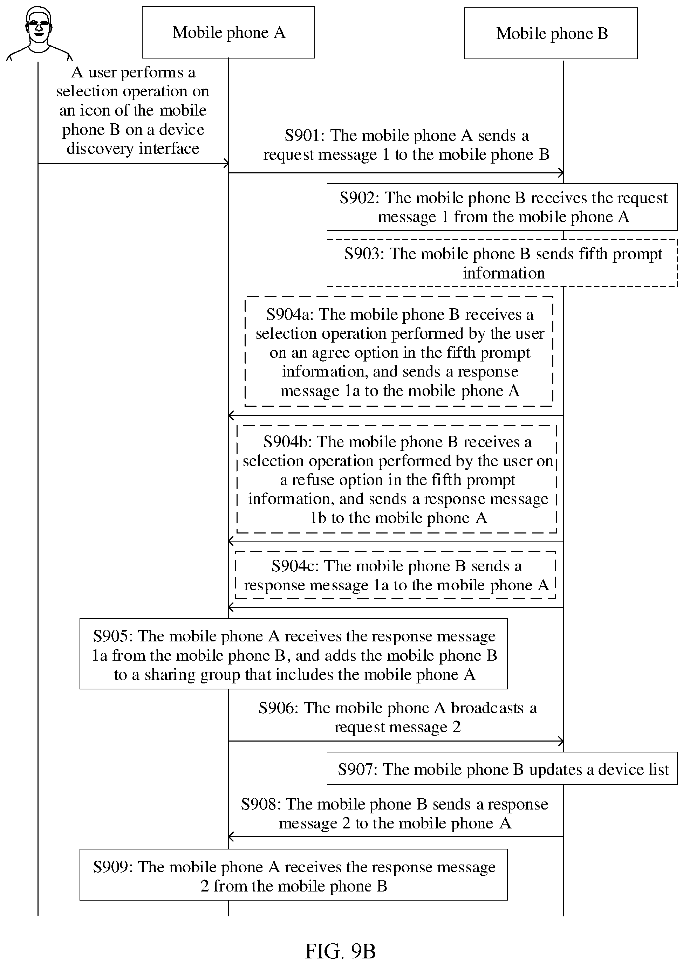

In this embodiment of this application, an example in which the mobile phone A adds the mobile phone B to the sharing group is used to describe a method used by the mobile phone A to add, to the sharing group, the receiving-end device selected by the user in Step 7. As shown in FIG. 9B, Step 7 includes S901 to S909.

S901: The mobile phone A sends a request message 1 to the mobile phone B in response to a selection operation performed by the user on the device icon of the mobile phone B on the device discovery interface.

The request message 1 (which may also be referred to as a first request message) is used to request the mobile phone B to join the sharing group. For example, the mobile phone A may send the request message 1 to the mobile phone B based on the device identifier (such as the Bluetooth MAC address) of the mobile phone B.

S902: The mobile phone B receives the request message 1 from the mobile phone A.

S903: The mobile phone B sends fifth prompt information.

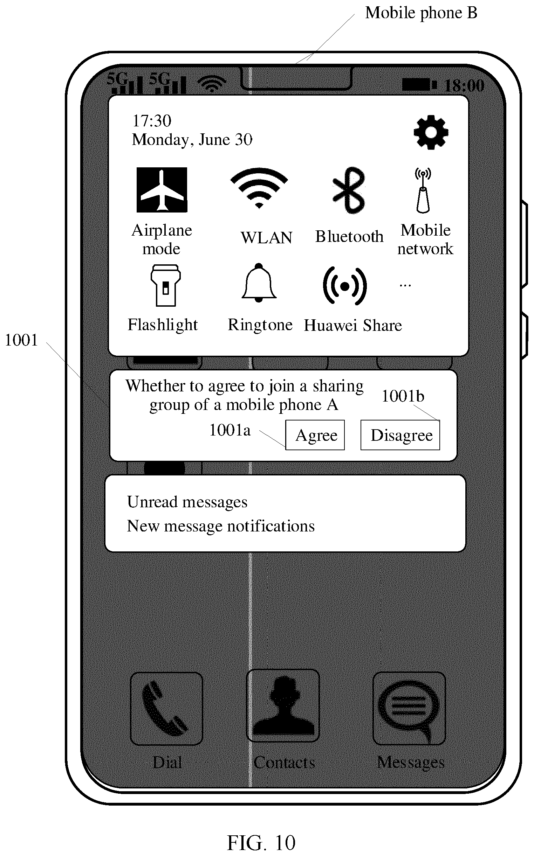

The fifth prompt information is used to request the user whether to allow the mobile phone B to join the sharing group. For example, the fifth prompt information includes an agree option and a refuse option. The agree option is used to indicate the mobile phone B to join the sharing group, and the refuse option is used to indicate that the mobile phone B refuses to join the sharing group. The mobile phone B may display the fifth prompt information through a notification message, a notification bar, or the like. This is not limited in this embodiment of this application. For example, as shown in FIG. 10, an interface displayed by the mobile phone B includes fifth prompt information 1001. For example, the fifth prompt information is "Whether to agree to join a sharing group of a mobile phone A". The fifth prompt information 1001 includes an "Agree" button 1001a and a "Disagree" button 1001b.

In a possible design, the mobile phone B may send a response message 1a to the mobile phone A (that is, perform S904a) in response to a selection operation performed by the user on the agree option. The response message 1a is used to indicate that the mobile phone B agrees to join the sharing group. Alternatively, the mobile phone B may send a response message 1b to the mobile phone A (that is, perform S904b) in response to a selection operation performed by the user on the refuse option. The response message 1b is used to indicate that the mobile phone B refuses to join the sharing group.

In this way, an option is provided for the user so that the user independently determines whether to join the sharing group, which improves user experience. In addition, security of an electronic device is improved. For example, if an account of the mobile phone A is not associated with an account of the mobile phone B (for example, the account of the mobile phone A is different from the account of the mobile phone B, or the account of the mobile phone A and the account of the mobile phone B are not friends), the mobile phone B may send sixth prompt information, to prompt the user whether to agree to join the sharing group (in other words, the user determines whether the mobile phone A is a trusted electronic device).

It should be noted that the mobile phone B may perform or skip S903 after receiving the request message 1 from the mobile phone A. To be specific, the mobile phone B may send the fifth prompt information, so that the user confirms whether to allow the mobile phone B to join the sharing group. Alternatively, the mobile phone B may not send the fifth prompt information. To be specific, after receiving the request message 1 from the mobile phone A, the mobile phone B may directly send the response message 1a to the mobile phone A (that is, the mobile phone B performs S904c). In other words, the mobile phone B may send the response message 1a (which may also be referred to as a first response message) to the mobile phone A without responding to an operation performed by the user. In this way, the mobile phone B can join the sharing group more efficiently. For example, if the account of the mobile phone A is the same as the account of the mobile phone B, or the account of the mobile phone A is associated with the account of the mobile phone B (for example, the account of the mobile phone A and the account of the mobile phone B are friends), the mobile phone B determines that the mobile phone A is a trusted electronic device (that is, there is no security risk), and automatically feeds back the response message 1a to the mobile phone A.

S904a: The mobile phone B receives the selection operation performed by the user on the agree option in the fifth prompt information, and sends the response message 1a to the mobile phone A.

The response message 1a is used to indicate that the mobile phone B agrees to join the sharing group, and the response message 1a includes the device identifier of the mobile phone B. For example, the mobile phone B may receive a selection operation performed by the user on the "Agree" button 1001a shown in FIG. 10, and sends the response message 1a to the mobile phone A.

S904b: The mobile phone B receives the selection operation performed by the user on the refuse option in the fifth prompt information, and sends the response message 1b to the mobile phone A.

The response message 1b is used to indicate that the mobile phone B refuses to join the sharing group. For example, the mobile phone B may receive a selection operation performed by the user on the "Disagree" button 1001b shown in FIG. 10, and sends the response message 1b to the mobile phone A.

S904c: The mobile phone B sends the response message 1a to the mobile phone A.

S905: The mobile phone A receives the response message 1a from the mobile phone B, and adds the mobile phone B to the sharing group that includes the mobile phone A.

It should be noted that, when the mobile phone A receives the response message 1a from a first receiving-end device (such as the mobile phone B), the mobile phone A needs to create the sharing group (namely, a device list), and adds the mobile phone A to the sharing group that includes the mobile phone A. Subsequently, after receiving a response message from another receiving-end device (such as the smartwatch C), the mobile phone A may directly add the smartwatch C to the sharing group that includes the mobile phone A and the mobile phone B.

In a possible implementation, the mobile phone A receives the response message 1a from the mobile phone B, creates a device list of the mobile phone A, and adds the device identifier of the mobile phone B to the device list. For example, the device identifier may be a device ID. A device identifier in the device list is a device identifier of an electronic device in the sharing group. For example, a device identifier of the mobile phone A is 001, the device identifier of a mobile phone B is 002, and the device list includes 001 and 002.

S906: The mobile phone A broadcasts a request message 2.

The request message 2 (which may also be referred to as a group update message) is used to indicate another device in the sharing group to update a device list. The request message 2 includes the device list, where the device list includes a device identifier of an electronic device that has joined the sharing group.

It should be noted that each electronic device in the sharing group may maintain a device list. After receiving the group update message broadcast by the mobile phone A, the electronic device may update, based on the group update message, the device list maintained by the device. When a member in the sharing group changes (for example, an electronic device joins the sharing group, or an electronic device in the sharing group leaves the sharing group), the mobile phone A may broadcast the request message 2, so that an electronic device in the sharing group may update a device list of the electronic device. In this way, each electronic device in the sharing group can determine electronic devices in the sharing group in real time.

S907: Each receiving-end device (such as the mobile phone B) in the sharing group updates a device list.

In a possible implementation, each receiving-end device in the sharing group compares a device list of the receiving-end device with the received device list in the request message 2, and updates the device list of the receiving-end device to the received device list. For example, a device list of the mobile phone B includes 002, and the device list of the mobile phone A includes 001 and 002. After receiving the device list from the mobile phone A, the mobile phone B updates the device list to 001 and 002.

S908: The mobile phone B sends a response message 2 to the mobile phone A.

The response message 2 is used to indicate that the receiving-end device that sends the response message 2 has updated the device list.

S909: The mobile phone A receives the response message 2 from the mobile phone B.

It should be noted that in the foregoing implementation (a), after detecting that the user selects the first device icon on the device discovery interface, the mobile phone A may send the request message 1 to the electronic device (such as the mobile phone B) corresponding to the device icon. After receiving the response message 1a from the device (such as the mobile phone B), the mobile phone A may create a sharing group that includes the mobile phone A and the device (such as the mobile phone B) corresponding to the device icon. Then, each time the mobile phone A detects that the user selects a device icon on the device discovery interface, the mobile phone A may send the request message 1 to an electronic device (such as the smartwatch C) corresponding to the device icon. After receiving the response message 1a from the device (such as the smartwatch C), the mobile phone A may add the device (such as the smartwatch C) to the sharing group.

In the foregoing implementation (b), after receiving the preset operation performed by the user on the device discovery interface, the mobile phone A may send the request message 1 to the electronic devices corresponding to device identifiers selected by the user. After receiving the response message 1a from any electronic device (such as the mobile phone B), the mobile phone A may create a sharing group that includes the mobile phone A and a device (such as the mobile phone B) corresponding to the device icon. Then, the mobile phone A may receive the response message 1a from another device. After receiving the response message 1a from an electronic device (such as the smartwatch C), the mobile phone A may add the device to the sharing group.

In the foregoing implementation (a) and implementation (b), each time the mobile phone A receives the response message 1a, the mobile phone A may broadcast the request message 2. After receiving the request message 2 broadcast by the mobile phone A, an electronic device in the sharing group may update, based on the request message 2, a device list maintained by the electronic device.

It should be noted that in this embodiment of this application, each electronic device may maintain a ledger for the sharing group after joining the sharing group. For example, the transmitting-end device (that is, the mobile phone A) may generate a ledger (such as a first ledger) when creating the sharing group. When another electronic device joins the sharing group, the receiving-end device that joins the sharing group may also generate a ledger (such as a second ledger). Then, an electronic device in the sharing group may maintain the ledger.

The ledger is used to record sharing record information of the to-be-shared file among a plurality of receiving-end devices. For example, the first ledger is used by the transmitting-end device to record sharing record information of the to-be-shared file among the plurality of receiving-end devices, and the second ledger is used by the receiving-end device to record the sharing record information of the to-be-shared file among the plurality of receiving-end devices. Each piece of record information includes a device identifier of an electronic device that sends the to-be-shared file (the electronic device is briefly referred to as a sharing device below and the device identifier is briefly referred to as a sharing device identifier below), a device identifier of an electronic device that receives the to-be-shared file (the electronic device is briefly referred to as a target device below and the device identifier is briefly referred to as a target device identifier below), a record identifier, a file path, and a file identifier. The record identifier includes a sharing identifier, a reception success identifier, a sharing cancellation identifier, and a sharing failure identifier. The file identifier is used to identify a to-be-shared file.

In this embodiment of this application, after transmission state information of the transmitting-end device or any receiving-end device changes, the electronic device whose transmission state information changes may generate one piece of record information. The ledger may include sharing information, reception success information, sharing cancellation information, and sharing failure information. When the sharing device sends the to-be-shared file, the sharing device may generate the sharing information, where the sharing information includes the sharing identifier. When successfully receiving the to-be-shared file, the target device may generate the reception success information, where the reception success information includes the reception success identifier. When the sharing device cancels sending the to-be-shared file, the sharing device may generate the sharing cancellation information, where the sharing cancellation information includes the sharing cancellation identifier. When the target device fails to receive the to-be-shared file, the target device may generate the sharing failure information, where the sharing failure information includes the sharing failure identifier.

For example, refer to Table 1, which shows the sharing information, the reception success information, the sharing cancellation information, and the sharing failure information that are recorded in the ledger. It is assumed that the device identifier of the mobile phone A is 001, the device identifier of the mobile phone B is 002, and the file identifier of the to-be-shared file is 1.

**Table 1**

| Record information | Sharing device identifier | Target device identifier | Record identifier | File path | File identifier |
|---|---|---|---|---|---|
| 1 | 001 | 002 | Sharing identifier | /DCIM/Camera | 1 |
| 2 | 001 | 002 | Reception success identifier | /DCIM/Aa | 1 |
| 3 | 001 | 002 | Sharing cancellation identifier | /DCIM/Camera | 1 |
| 4 | 001 | 002 | Reception failure identifier | Null | 1 |

It should be noted that with reference to the foregoing description, Table 1, and (a) and (b) in FIG. 6A, when the mobile phone A sends the to-be-shared file to the mobile phone B, the mobile phone A may generate the "record information 1". With reference to FIG. 7A and FIG. 7B, when the mobile phone B successfully receives the to-be-shared file, the mobile phone B may generate the "record information 2". When the mobile phone A cancels sending the to-be-shared file to the mobile phone B, the mobile phone A may generate the "record information 3". When the mobile phone B fails to receive the to-be-shared file from the mobile phone, the mobile phone B may generate the "record information 4".

In some embodiments, after any electronic device in the sharing group generates one piece of record information, electronic devices in the sharing group may be triggered to synchronize ledgers. To be specific, each of the electronic devices in the sharing group updates a ledger of the electronic device when an electronic device in the sharing group shares a file with a target device, an electronic device in the sharing group successfully receives the to-be-shared file, a sharing device actively cancels sharing a file with a target device, and a target device fails to receive the to-be-shared file.

In some other embodiments, after any electronic device in the sharing group generates at least two pieces of record information, electronic devices in the sharing group may be triggered to synchronize ledgers. This reduces a quantity of times that an electronic device broadcasts a ledger, and reduces power consumption of the electronic device.

In this embodiment of this application, before the mobile phone B performs Step 3, the mobile phone B may further perform Step 8, to generate new record information and indicate a receiving-end device in the sharing group to synchronize a ledger. Specifically, as shown in FIG. 11A-1 and FIG. 11A-2, the method in this embodiment of this application may further include Step 8.

Step 8: After successfully receiving the to-be-shared file from the mobile phone A, the mobile phone B generates reception success information, and indicates another electronic device in the sharing group to synchronize a ledger.

In the following, a method for synchronizing a ledger by an electronic device is described by using an example in which the mobile phone A synchronizes a ledger after the mobile phone B generates a piece of record information (such as the reception success information). As shown in FIG. 11B, Step 8 includes S1101 to S1113.

S1101: The mobile phone B broadcasts a ledger record message 1.

The ledger record message 1 is used to indicate another electronic device (such as the mobile phone A) in the sharing group to synchronize a ledger. The ledger record message 1 includes a ledger identifier of the mobile phone B and the device identifier of the mobile phone B. The ledger identifier is used to identify a ledger. For example, the ledger identifier of the mobile phone B may be a hash value calculated by the mobile phone B through a hash algorithm based on record information in the ledger. For example, a ledger B of the mobile phone B includes record information a and record information b, and a ledger identifier corresponding to the ledger B is "ab".

S1102: The mobile phone A receives the ledger record message 1 from the mobile phone B.

S1103: The mobile phone A determines whether a ledger of the mobile phone A is the same as the ledger of the mobile phone B.

In this embodiment of this application, the mobile phone A may compare a ledger identifier of the mobile phone A with the ledger identifier of the mobile phone B. If the ledger identifier of the mobile phone A is the same as the ledger identifier of the mobile phone B, the mobile phone A may determine that the ledger of the mobile phone A is the same as the ledger of the mobile phone B. If the ledger identifier of the mobile phone A is different from the ledger identifier of the mobile phone B, the mobile phone A may determine that the ledger of the mobile phone A is different from the ledger of the mobile phone B.

For example, the ledger identifier of the mobile phone B is a hash value a. The mobile phone A may calculate a hash value b through the hash algorithm based on record information in the ledger of the mobile phone A. The mobile phone A may determine, based on the hash value a and the hash value b, whether the ledger of the mobile phone A is the same as the ledger of the mobile phone B.

In a possible design, if the ledger of the mobile phone A is the same as the ledger of the mobile phone B, the mobile phone A performs S1104 and S1105. If the ledger of the mobile phone A is different from the ledger of the mobile phone B, the mobile phone A and the mobile phone B perform S1106 to S1113.

S1104: The mobile phone A sends a ledger confirmation message to the mobile phone B.

The ledger confirmation message is used to indicate that the ledger of the mobile phone A is the same as the ledger of the mobile phone B. The ledger confirmation message includes the device identifier of the mobile phone A. For example, the mobile phone A may send the ledger confirmation message to the mobile phone B based on the device identifier of the mobile phone B.

S1105: The mobile phone B receives the ledger confirmation message from the mobile phone A.

It may be understood that, after receiving the ledger confirmation message from the mobile phone A, the mobile phone B may determine, based on the device identifier of the mobile phone A, that the ledger of the mobile phone A is the same as the ledger of the mobile phone B, and there is no need to update the ledger.

S1106: The mobile phone A sends a ledger record message 2 to the mobile phone B.

The ledger record message 2 includes the device identifier of the mobile phone A and the record information in the ledger of the mobile phone A.

In a possible implementation, the mobile phone A may obtain, through the hash algorithm, a hash linked list corresponding to the ledger based on the record information in the ledger of the mobile phone A. Then, the mobile phone A may send the hash linked list and the device identifier to the mobile phone B based on the device identifier of the mobile phone B.

It should be noted that a hash linked list corresponding to a ledger may reflect record information recorded in the ledger. In this way, the mobile phone A may notify the mobile phone B of the record information in the ledger of the mobile phone A by sending the hash linked list corresponding to the ledger to the mobile phone B.

S1107: The mobile phone B receives the ledger record message 2 from the mobile phone A.

S1108: The mobile phone B determines missing record information of the mobile phone A.

In a possible implementation, the mobile phone B receives the record information in the ledger from the mobile phone A. Then, the mobile phone B may compare the record information in the ledger of the mobile phone with the record information in the ledger of the mobile phone A, to obtain the missing record information (such as the first indication message) of the mobile phone A. For example, the mobile phone B may compare a hash linked list corresponding to the ledger of the mobile phone B with the hash linked list corresponding to the ledger of the mobile phone A, to obtain a missing hash linked list (that is, the missing record information of the mobile phone A).

S1109: The mobile phone B sends an indication message 1 to the mobile phone A.

The indication message 1 is used to indicate the mobile phone A to add the missing record information. The indication message 1 includes the device identifier of the mobile phone B and the missing record information of the mobile phone A.

In a possible implementation, the mobile phone B sends the missing record information of the mobile phone A to the mobile phone A based on the device identifier of the mobile phone A.

S1110: The mobile phone A receives the indication message 1 from the mobile phone B.

S1111: The mobile phone A updates the ledger of the mobile phone A.

In this embodiment of this application, the mobile phone A may update the ledger of the mobile phone A based on transmission state information of the mobile phone B. For example, current transmission state information of the mobile phone B is used to indicate that the mobile phone B has successfully received the to-be-shared file. The mobile phone A may add the missing record information (such as the reception success information) of the mobile phone A to the ledger, to update the ledger of the mobile phone A.

S1112: The mobile phone A sends a response message 3 to the mobile phone B.

The response message 3 is used to indicate that the mobile phone A that sends the response message 3 has updated the ledger. The response message 3 includes the device identifier of the mobile phone A.

S1113: The mobile phone B receives the response message 3 from the mobile phone A.

It should be noted that in this embodiment of this application, a length of a message broadcast by an electronic device is less than or equal to a message length threshold. For example, the message length threshold may be 20000 bytes (Byte). In addition, if the mobile phone A does not receive a message from the mobile phone B within a first response time threshold (for example, two seconds) after the mobile phone A broadcasts a message, the mobile phone A may broadcast the message again. If the mobile phone A does not receive a message from the mobile phone B within a second response time threshold (for example, six seconds), the mobile phone A stops broadcasting the message. This fully ensures that the mobile phone B can receive the message broadcast by the mobile phone A.

It may be understood that, after receiving a second confirmation message from the mobile phone B, the mobile phone A may determine, based on the device identifier of the mobile phone B, that the ledger of the mobile phone B has been updated. In this way, it can be ensured that the ledger of the mobile phone B is the same as the ledger of the mobile phone A.

It may be understood that when any electronic device in the sharing group generates new record information, another electronic device in the sharing group may be triggered to synchronize a ledger (reference may be made to S1101 to S1113, and details are not described herein), to ensure real-time performance and accuracy of information recorded in the ledger.

For example, with reference to Table 1, when the mobile phone A sends the to-be-shared file to the mobile phone B, the mobile phone A may generate the "record information 1", and broadcast a ledger a that includes the "record information 1". Then, another device in the sharing group may receive the ledger a, and add the "record information 1" to a ledger of the another device.

It may be understood that, after obtaining a latest ledger and a latest device list, an electronic device in the sharing group may determine, based on record information in the ledger and device identifiers in the device list, members of the sharing group and a state of receiving the to-be-shared file by each member. Then, an electronic device that has the to-be-shared file may send the to-be-shared file to an electronic device that does not have the to-be-shared file. With reference to the ledger and the device list, the following specifically describes implementations (1), (2), and (3) in which the mobile phone B sends the to-be-shared file to the smartwatch C after successfully receiving the to-be-shared file from the mobile phone A.

In the foregoing implementation (1), after successfully receiving the to-be-shared file from the mobile phone A, the mobile phone B may send, based on the device list and the ledger, the to-be-shared file to an electronic device (such as the smartwatch C) that has the to-be-shared file. For example, the device list of the mobile phone B includes the device identifier of the mobile phone A, the device identifier of the mobile phone B, a device identifier of the smartwatch C, a device identifier of the notebook computer D, and a device identifier of the smart television E. The ledger of the mobile phone B includes the reception success information indicating that the mobile phone B has successfully received the to-be-shared file and sharing information indicating that mobile phone A sends the to-be-shared file to the notebook computer D. In this way, the mobile phone B may determine that neither the smartwatch C nor the smart television E has the to-be-shared file. Then, the mobile phone B may send the to-be-shared file to the smartwatch C based on a device identifier of an electronic device (such as the smartwatch C) that does not have the to-be-shared file.

In the foregoing implementation (2), after the mobile phone A receives the first indication message, the mobile phone A may determine, based on the ledger and the device list, an electronic device that has the to-be-shared file and an electronic device that does not have the to-be-shared file. For example, the ledger of the mobile phone A includes the reception success information indicating that the mobile phone B has successfully received the to-be-shared file and sharing information indicating that the mobile phone A sends the to-be-shared file to the notebook computer D. The mobile phone A may determine that electronic devices that do not receive the to-be-shared file in the sharing group are the smartwatch C and the smart television E.

Then, the mobile phone A may send an indication message 2 to the mobile phone B, where the indication message 2 is used to indicate the mobile phone B to send the to-be-shared file to the electronic device (such as the smartwatch C) that does not have the to-be-shared file. The indication message 2 includes the device identifier of the smartwatch C and the file identifier of the to-be-shared file. Subsequently, the mobile phone B may receive the indication message 2 from the mobile phone A, and send the to-be-shared file to the smartwatch C. For example, the mobile phone B may find a file path of the to-be-shared file based on the file identifier of the to-be-shared file and the ledger, and obtain the to-be-shared file. After that, the mobile phone B may send the to-be-shared file to the smartwatch C based on the device identifier of the smartwatch C.

In the foregoing implementation (3), after successfully receiving the to-be-shared file from the mobile phone A, the mobile phone B may receive the file request 1 from the smartwatch C in an implementation (3₁) and an implementation (3₂).

In the implementation (3₁), the mobile phone A may determine, based on the ledger and the device list, an electronic device (such as the smartwatch C) that does not have the to-be-shared file. Then, the mobile phone A sends an indication message 3 to the smartwatch C, where the indication message 3 is used to indicate the smartwatch C to send the file request 1 to the mobile phone B. The indication message 3 includes a device identifier of a first device and the file identifier of the to-be-shared file. The smartwatch C receives the indication message 3 from the mobile phone A. Then, the smartwatch C sends the file request 1 to the mobile phone B.

In the implementation (3₂), the mobile phone A may determine, based on the ledger and the device list, an electronic device (such as the smartwatch C) that does not have the to-be-shared file. Then, the mobile phone A sends an indication message 4 to the smartwatch C, where the indication message 4 is used to indicate the smartwatch C to query the ledger. After receiving the indication message 4 from the mobile phone A, the smartwatch C may query the ledger to determine that the mobile phone A and the mobile phone B have the to-be-shared file. Then, the smartwatch C may request the user to determine an electronic device (such as the mobile phone B) that has the to-be-shared file, and send the file request 1 to the mobile phone B. Alternatively, the smartwatch C may directly send the file request 1 to any electronic device (such as the mobile phone B) that has the to-be-shared file.

It should be noted that, the mobile phone B may generate the reception success information after successfully receiving the to-be-shared file, and the electronic device in the sharing group may synchronize the ledger to determine that the mobile phone B already has the to-be-shared file. In this way, the smartwatch C may actively request the to-be-shared file from the first device based on the ledger.

It may be understood that, after the mobile phone B successfully receives the to-be-shared file, the mobile phone B may also share the file with the smartwatch C. Therefore, in this embodiment of this application, a plurality of electronic devices (such as the mobile phone A and the mobile phone B) may send the to-be-shared file to a plurality of receiving-end devices at the same time. This reduces an amount of time used by the transmitting-end device to share the file with a plurality of receiving-end devices, and improves file sharing efficiency.

In this embodiment of this application, when a sharing device (such as the transmitting-end device and a receiving-end device that has successfully received the to-be-shared file) fails to share the to-be-shared file with a target device, another electronic device that has the to-be-shared file in the sharing group may share the to-be-shared file with the target device. For example, when the mobile phone A (that is, the transmitting-end device) fails to share the to-be-shared file with the notebook computer D, an electronic device (such as the mobile phone B) that has the to-be-shared file may share the to-be-shared file with the notebook computer D. For another example, when the mobile phone B (that is, the receiving-end device that has successfully received the to-be-shared file) fails to share the to-be-shared file with the smartwatch C, an electronic device (such as the mobile phone A) that has the to-be-shared file may share the to-be-shared file with the smartwatch C. In the following embodiment, the method in this embodiment of this application is described by using an example in which the mobile phone B shares the to-be-shared file with the notebook computer D when the mobile phone A fails to share the to-be-shared file with the notebook computer D.

To be specific, in a process in which the mobile phone A performs Step 5, that is, the mobile phone A sends the to-be-shared file to the notebook computer D after the mobile phone B successfully receives the to-be-shared file from the mobile phone A, the mobile phone A fails to share the to-be-shared file with the notebook computer D. In this case, the mobile phone B may perform Step 9 to send the to-be-shared file to the notebook computer D and another receiving-end device. Specifically, as shown in FIG. 13A-1 and FIG. 13A-2, the method in this embodiment of this application may further include Step 9.

Step 9: In a case in which the mobile phone A finishes sending the to-be-shared file to the mobile phone B, the mobile phone B sends the to-be-shared file to the notebook computer D if the mobile phone A fails to share the file with the notebook computer D.

In a possible design, in the case in which the mobile phone A finishes sending the to-be-shared file to the mobile phone B, and the mobile phone B is sharing the to-be-shared file with the smartwatch C, the mobile phone A fails to share the file with the notebook computer D. In this case, the mobile phone B may send the to-be-shared file to the notebook computer D and another receiving-end device that does not have the to-be-shared file. For example, as shown in FIG. 12A, after the mobile phone A successfully shares the file with the mobile phone B, the mobile phone A fails to share the to-be-shared file with the notebook computer D. In this case, the mobile phone B is sharing the file with the smartwatch C, and neither the notebook computer D nor the smart television E has the to-be-shared file. Then, as shown in FIG. 12B, the mobile phone B may send the to-be-shared file to the smartwatch C, the notebook computer D, and the smart television E.

In another possible design, in the case in which the mobile phone A finishes sending the to-be-shared file to the mobile phone B, and the mobile phone B is not sharing the to-be-shared file with a receiving-end device in the sharing group, the mobile phone A fails to share the file with the notebook computer D. In this case, the mobile phone B may send the to-be-shared file to the notebook computer D and another receiving-end device that does not have the to-be-shared file.

In conclusion, in the case in which the mobile phone A finishes sending the to-be-shared file to the mobile phone B, when the mobile phone A fails to share the file with the notebook computer D, the mobile phone B may send the to-be-shared file to the notebook computer D and another receiving-end device that does not have the to-be-shared file, regardless of whether the mobile phone B is sharing or not sharing the to-be-shared file with a receiving-end device. This ensures that each receiving-end device can receive the to-be-shared file. Therefore, the method in this embodiment of this application may increase a probability that the receiving-end device successfully receives the to-be-shared file.

It should be noted that a reason why a target device fails to receive the to-be-shared file is not limited in this embodiment of this application. For example, the target device may fail to receive the to-be-shared file because a sharing device leaves the sharing group, the sharing device cannot send the to-be-shared file due to a network issue (for example, the user uses the sharing device to answer a call), or the like.

In the following, a specific process in which another electronic device that has the to-be-shared file in the sharing group shares the to-be-shared file with a target device that fails to receive the to-be-shared file is described by using an example in which the mobile phone A fails to share the file with the notebook computer D, and the mobile phone B sends the to-be-shared file to the notebook computer D. As shown in FIG. 13B, Step 9 includes S1301 to S1306.

S1301: The notebook computer D determines that the to-be-shared file fails to be received.

For example, it is assumed that when the mobile phone A is sending the to-be-shared file to the notebook computer D, the mobile phone A cannot continue sharing the to-be-shared file with the notebook computer D due to a network issue. The notebook computer D determines that the to-be-shared file fails to be received. For example, as shown in FIG. 14A, the mobile phone A stops sending the to-be-shared file to the notebook computer D, and fourth prompt information 1401 displayed by the notebook computer D may indicate that the mobile phone A does not receive the to-be-shared file. For example, the fourth prompt information 1401 may be "Failed to receive a file from a mobile phone A".

It should be noted that, with reference to FIG. 8(a) and FIG. 14A, it can be learned that when the mobile phone A fails to share the to-be-shared file with the notebook computer D and the notebook computer D has received a portion (such as a photo) of the file, the notebook computer D does not store the portion of the file. In addition, progress displayed by the notebook computer D indicates that 0% of the file has been received.

S1302: The notebook computer D determines the mobile phone B based on the ledger.

In a possible implementation, after determining that the to-be-shared file fails to be received, the notebook computer D may start a mutual-aid process (that is, S1302 to S1306). The notebook computer D may query, based on a file identifier of the to-be-shared file that fails to be received, the ledger for an electronic device (that is, an electronic device that has the to-be-shared file) that has successfully received the to-be-shared file corresponding to the file identifier, and determine that the mobile phone B has successfully received the to-be-shared file. Then, the notebook computer D may obtain the to-be-shared file from the mobile phone B.

S1303: The notebook computer D sends an indication message 5 to the mobile phone B.

The indication message 5 is used to indicate the mobile phone B to send the to-be-shared file to the notebook computer D. The indication message 5 includes the device identifier of the notebook computer D and the file identifier of the to-be-shared file.

In a possible implementation, the notebook computer D determines the device identifier of the mobile phone B based on record information in the ledger. Then, the notebook computer D may send the indication message 5 to the mobile phone B based on the device identifier of the mobile phone B.

S1304: The mobile phone B receives the indication message 5 from the notebook computer D.

S1305: The mobile phone B sends the to-be-shared file to the notebook computer D.

For example, the mobile phone B may search for the to-be-shared file based on the file identifier of the to-be-shared file. Then, the mobile phone B may send the to-be-shared file to the notebook computer D based on the device identifier of the notebook computer D.

S1306: The notebook computer D receives the to-be-shared file from the mobile phone B.

In some embodiments, the notebook computer D receives the to-be-shared file from the mobile phone B, and updates a progress message for the notebook computer D. For example, as shown in FIG. 14B with reference to FIG. 14A, the mobile phone B is sending the to-be-shared file to the notebook computer D, and fourth prompt information 1402 displayed by the notebook computer D may be "The mobile phone B is sharing two files with you". Optionally, the notebook computer D may further display "Failed to receive a file from a mobile phone A". In addition, when the mobile phone B is sending the to-be-shared file to the smartwatch C, the mobile phone B may also send the to-be-shared file to the notebook computer D (as shown in FIG. 14B). Moreover, progress of receiving the file from the mobile phone B by the smartwatch C may be the same as or different from that of receiving the file from the mobile phone B by the notebook computer D.

In the foregoing technical solution, when the notebook computer D fails to receive the to-be-shared file, the mobile phone B may send the to-be-shared file to the notebook computer D. This ensures that the notebook computer D can receive the to-be-shared file. Therefore, the method in this embodiment of this application may increase a probability that the receiving-end device successfully receives the to-be-shared file.

In some embodiments, the notebook computer D may further indicate another receiving-end device that does not have the to-be-shared file in the sharing group to obtain the to-be-shared file from an electronic device that has the to-be-shared file.

In the following, a process in which the notebook computer D indicates the another receiving-end device that does not have the to-be-shared file in the sharing group to obtain the to-be-shared file from the electronic device that has the to-be-shared file is described by using an example in which the notebook computer D indicates the smart television E to obtain the to-be-shared file from the mobile phone B, where the smart television E does not have the to-be-shared file. As shown in FIG. 15, Step 9 may further include S1307.

S1307: The notebook computer D sends a second indication message to the smart television E.

The second indication message is used to indicate the smart television E to obtain the to-be-shared file from the mobile phone B.

In a possible implementation, the notebook computer D may query, based on the file identifier of the to-be-shared file that fails to be received, the ledger for an electronic device (that is, an electronic device that has the to-be-shared file) that has successfully received the to-be-shared file corresponding to the file identifier, and determine that the mobile phone B has successfully received the to-be-shared file. In addition, the notebook computer D determines, based on the ledger and the device list, that the smart television E does not have the to-be-shared file. Then, the notebook computer D sends the second indication message (including the file identifier of the to-be-shared file and the device identifier of the mobile phone B) to the smart television E. In this way, the smart television E may obtain the to-be-shared file from the mobile phone B.

In another possible implementation, the notebook computer D determines, based on the ledger and the device list, that the smart television E does not have the to-be-shared file. Then, the notebook computer D sends the second indication message to the smart television E, so that the smart television E performs a mutual-aid policy, that is, performs steps similar to S 1302 to S1306, to obtain the to-be-shared file from the mobile phone B.

It should be noted that, after a plurality of receiving-end devices in the sharing group have received the to-be-shared file, a receiving-end device that does not have the to-be-shared file may select any electronic device from the plurality of receiving-end devices that have received the to-be-shared file, to obtain the to-be-shared file.

In the foregoing technical solution, when the mobile phone A fails to share the file with the notebook computer D, the mobile phone B may send the to-be-shared file to the notebook computer D and another receiving-end device. This ensures that each receiving-end device can receive the to-be-shared file. Therefore, the method in this embodiment of this application may increase a probability that the receiving-end device successfully receives the to-be-shared file.

In this embodiment of this application, after each receiving-end device in the sharing group successfully receives the to-be-shared file, the mobile phone A may perform Step 8 to dissolve the sharing group. Specifically, as shown in FIG. 16A-1 and FIG. 16A-2, the method in this embodiment of this application may further include Step 10.

Step 10: When each receiving-end device in the sharing group has successfully received the to-be-shared file, the mobile phone A deletes a device identifier of each receiving-end device from the device list.

For example, the mobile phone A may determine, based on the ledger and the device list, that each receiving-end device in the sharing group successfully receives the to-be-shared file, and delete device identifiers from the device list. For example, the ledger of the mobile phone A includes reception success information indicating that the mobile phone B successfully receives the to-be-shared file, reception success information indicating that the notebook computer D successfully receives the to-be-shared file, reception success information indicating that the notebook computer D successfully receives the to-be-shared file, and reception success information indicating that the smart television E successfully receives the to-be-shared file. The device list includes the device identifier of the mobile phone B, the device identifier of the notebook computer D, the device identifier of the notebook computer D, and the device identifier of the smart television E. The mobile phone A may determine that an electronic device corresponding to each device identifier in the device list has successfully received the to-be-shared file. Then, the mobile phone A may delete all device identifiers from the device list.

Optionally, when each receiving-end device in the sharing group has successfully received the to-be-shared file, the mobile phone A does not display transmission state information. For example, when each receiving-end device in the sharing group has successfully received the to-be-shared file, the mobile phone A does not display transmission state information such as "Sending" and "Sending completed". For example, when each receiving-end device in the sharing group has successfully received the to-be-shared file, the mobile phone A may display the interface shown in FIG. 3A or the device discovery interface 401 shown in FIG. 4A, or may display a home screen of the mobile phone A. This is not limited in this embodiment of this application.

In the following, a process in which the mobile phone A deletes the device identifiers from the device list is described by using an example in which the mobile phone A deletes the device identifier of the mobile phone B. As shown in FIG. 16B, Step 10 includes S1601 to S1605.

S1601: The mobile phone A sends a request message 3 to the mobile phone B.

The request message 3 is used to indicate the mobile phone B to delete all device identifiers from the device list. The request message 3 may be further used to indicate the mobile phone B to delete the ledger.

S1602: The mobile phone B receives the request message 3 from the mobile phone A.

S1603. The mobile phone B deletes all device identifiers from the device list.

S1604: The mobile phone B sends a response message 4 to the mobile phone A.

The response message 4 is used to indicate that the mobile phone B has deleted all device identifiers from the device list.

S1605: The mobile phone A receives the response message 4 from the mobile phone B, and deletes the device identifier of the mobile phone B.

It should be noted that, the mobile phone A may broadcast an updated device list when deleting the device identifier of the mobile phone B, so that another receiving-end device in the sharing group synchronizes the device list of the mobile phone A.

In some embodiments, the mobile phone A may further remove a receiving-end device from the sharing group in response to a removal operation performed by the user on a device icon. For example, as shown in (a) in FIG. 17, the mobile phone B has successfully received the to-be-shared file. In response to a removal operation (such as a tap operation) that is input by the user to the mobile phone A and that is performed on the mobile phone B, the mobile phone A may delete the device identifier of the mobile phone B from the device list, and display an interface shown in (b) in FIG. 17 (that is, the mobile phone B is removed from the sharing group). For another example, the smartwatch C does not have the to-be-shared file. In response to a removal operation (such as a tap operation) that is input by the user to the mobile phone A and that is performed on the smartwatch C, the mobile phone A may delete the device identifier of the mobile phone C from the device list (that is, the smartwatch C is removed from the sharing group), and cancel sending the to-be-shared file to the smartwatch C.

It should be noted that, when each receiving-end device in the sharing group has successfully received the to-be-shared file, the receiving-end device in the sharing group may view the to-be-shared file. For example, in response to an operation performed by the user on "Tap to view" in (b) in FIG. 7A, the mobile phone B may display a to-be-shared file 1801 (which includes the photos 301 and 302 shown in FIG. 3A) shown in FIG. 18(a). In addition, as shown in FIG. 18(b), FIG. 18(c), and FIG. 18(d), the smartwatch C, the notebook computer D, and the smart television E may also display the to-be-shared file 1801. The foregoing mainly describes the solutions provided in embodiments of this application from a perspective of an electronic device. It may be understood that, to implement the foregoing functions, the electronic device includes a corresponding hardware structure and/or software module for performing each of the functions. A person of ordinary skill in the art should easily be aware that, in combination with the examples described in embodiments disclosed in this application, steps of the file sharing method may be implemented by hardware or a combination of hardware and computer software in this application. Whether a function is performed by hardware or hardware driven by electronic device software depends on particular applications and design constraints of the technical solution. A person skilled in the art may use different methods to implement the described functions for each particular application, but it should not be considered that the implementation goes beyond the scope of this application.

In embodiments of this application, a file sharing apparatus may be divided into functional modules or functional units based on the foregoing method examples. For example, each functional module or functional unit may be obtained through division based on a corresponding function, or two or more functions may be integrated into one processing module. The integrated module may be implemented in a form of hardware, or may be implemented in a form of a software functional module or functional unit. In embodiments of this application, module or unit division is an example, and is merely a logical function division. In actual implementation, another division manner may be used.

With reference to an embodiment of this application, the following describes in detail a system architecture of an electronic device shown in FIG. 2B.

A mutual-aid engine module 202 is configured to support a mobile phone A in determining a to-be-shared file, determining a first sharing manner, and performing S1605 in the foregoing method embodiment; and/or is configured to perform another process of the technology described in this specification. For example, a function of the mutual-aid engine module 202 may be implemented by using a processor 210 of the mobile phone A.

A policy management module 203 is configured to support the mobile phone A in performing a process in which the mobile phone A may indicate a mobile phone B to send the to-be-shared file to a smartwatch C in the foregoing method embodiment, and/or is configured to perform another process of the technology described in this specification. For example, a function of the policy management module 203 may be implemented by using the processor 210 of the mobile phone A.

A group management module 204 is configured to support the mobile phone A in performing S901 to S909 and S1601 to S1605 in the foregoing method embodiment, and/or is configured to perform another process of the technology described in this specification. For example, a function of the group management module 204 may be implemented by using a wireless communication module 260, an internal memory 221, the processor 210, and the like of the mobile phone A.

A distributed mutual-aid module 205 is configured to support the mobile phone A in performing a mutual-aid policy, and maintaining a state (such as reception success or reception failure) of a file in each file mutual-aid process. For example, the distributed mutual-aid module 205 is configured to support the mobile phone A in performing S1201 to S 1207 in the foregoing method embodiment, and/or is configured to perform another process of the technology described in this specification. For example, a function of the distributed mutual-aid module 205 may be implemented by using the wireless communication module 260, the internal memory 221, the processor 210, and the like of the mobile phone A.

A distributed ledger module 206 is configured to support the mobile phone A in performing S1101 to S1113 in the foregoing method embodiment, and/or is configured to perform another process of the technology described in this specification. For example, a function of the distributed ledger module 206 may be implemented by using the wireless communication module 260, the internal memory 221, the processor 210, and the like of the mobile phone A.

A distributed communication module 207 is configured to support the mobile phone A in performing S401a and S401b in the foregoing method embodiment, and/or is configured to perform another process of the technology described in this specification. For example, a function of the distributed communication module 207 may be implemented by using the wireless communication module 260, the internal memory 221, the processor 210, and the like of the mobile phone A.

Some other embodiments of this application provide an electronic device (such as a mobile phone 200 shown in FIG. 2A). The electronic device may include a memory and one or more processors. The memory is coupled to the processor. The electronic device may further include a camera. Alternatively, the electronic device may be connected to an external camera. The memory is configured to store computer program code. The computer program code includes computer instructions. When the processor executes the computer instructions, the electronic device may perform functions or steps performed by a mobile phone in the foregoing method embodiment. For a structure of the electronic device, reference may be made to a structure of the mobile phone 200 shown in FIG. 2A.

An embodiment of this application further provides a chip system. As shown in FIG. 19, the chip system includes at least one processor 1901 and at least one interface circuit 1902. The processor 1901 and the interface circuit 1902 may be interconnected through a line. For example, the interface circuit 1902 may be configured to receive a signal from another apparatus (such as a memory of an electronic device). For another example, the interface circuit 1902 may be configured to send a signal to another apparatus (such as the processor 1901). For example, the interface circuit 1902 may read instructions stored in the memory, and send the instructions to the processor 1901. When the instructions are executed by the processor 1901, the electronic device (such as the mobile phone 200 shown in FIG. 2A) is enabled to perform steps in the foregoing embodiment. Certainly, the chip system may further include another discrete device. This is not specifically limited in this embodiment of this application.

An embodiment of this application further provides a computer storage medium. The computer storage medium includes computer instructions. When the computer instructions are run on the foregoing electronic device (such as a mobile phone 200 shown in FIG. 2A), the electronic device is enabled to perform functions or steps performed by a mobile phone in the foregoing method embodiment.

An embodiment of this application further provides a computer program product. When the computer program product is run on a computer, the computer is enabled to perform functions or steps performed by a mobile phone in the foregoing method embodiment.

Based on the foregoing descriptions of the implementations, a person skilled in the art may clearly understand that for the purpose of convenient and brief descriptions, division into the foregoing functional modules is merely used as an example for description. In actual application, the foregoing functions may be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate; and parts displayed as units may be one or more physical units, may be located in one place, or may be distributed in different places. Some or all of the units may be selected depending on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A file sharing method, applied to a scenario in which a transmitting-end device shares a file with a plurality of receiving-end devices, wherein the method comprises:
receiving, by the transmitting-end device, a selection operation performed on each of the plurality of receiving-end devices, wherein the selection operation is used to trigger the transmitting-end device to send a to-be-shared file to a corresponding receiving-end device, and the plurality of receiving-end devices comprise a first device, a second device, and a third device;
sending, by the transmitting-end device, the to-be-shared file to the first device;
after the transmitting-end device finishes sharing the to-be-shared file with the first device, sending, by the transmitting-end device, the to-be-shared file to the third device; and
indicating, by the transmitting-end device, the first device to send the to-be-shared file to the second device, or indicating, by the transmitting-end device, the second device to obtain the to-be-shared file from the first device,
wherein the method further comprises:
generating, by the transmitting-end device, a first ledger, wherein the first ledger is used by the transmitting-end device to record sharing record information of the to-be-shared file among the plurality of receiving-end devices;
updating, by the transmitting-end device, the first ledger based on transmission state information of each receiving-end device; and
synchronizing, by the transmitting-end device, an updated first ledger to the plurality of receiving-end devices; and
if the third device fails to receive the to-be-shared file (S1301), selecting (S1302), by the third device based on an updated ledger, the first device from receiving-end devices that have the to-be-shared file; and
obtaining (S1306), by the third device, the to-be-shared file from the first device from receiving-end devices that have the to-be-shared file.

2. The method according to claim 1, wherein the transmitting-end device finishes sharing the to-be-shared file with the first device comprises:
receiving, by the transmitting-end device, a first indication message from the first device, wherein the first indication message is used to indicate that the first device successfully receives the to-be-shared file from the transmitting-end device.

3. The method according to claim 1 or 2, wherein after the receiving, by the transmitting-end device, a selection operation performed on each of the plurality of receiving-end devices, the method further comprises:
displaying, by the transmitting-end device, transmission state information of transmitting the to-be-shared file to the receiving-end devices, wherein the transmission state information of the receiving-end devices comprises first state information and second state information, the first state information is used to indicate that the to-be-shared file is being sent to a corresponding receiving-end device, and the second state information is used to indicate that the to-be-shared file is ready to be sent to a corresponding receiving-end device, wherein
in a process in which the transmitting-end device sends the to-be-shared file to the first device, transmission state information of the first device is the first state information, and transmission state information of the second device and the third device is the second state information.

4. The method according to claim 3, wherein the method further comprises:
displaying, by the transmitting-end device, transmission state information of the third device as the first state information in a process in which the transmitting-end device sends the to-be-shared file to the third device; and
displaying, by the transmitting-end device, transmission state information of the second device as the first state information in a process in which the first device sends the to-be-shared file to the second device.

5. The method according to any one of claims 1 to 4, wherein the selection operation is further used to trigger the transmitting-end device to add the corresponding receiving-end device to a sharing group that comprises the transmitting-end device, and the method further comprises:
creating, by the transmitting-end device, the sharing group that comprises the transmitting-end device, generating a device list of the sharing group, and sending a first request message to the plurality of receiving-end devices, wherein the first request message is used to request the plurality of receiving-end devices to join the sharing group, and the device list comprises a device identifier of the transmitting-end device; and
receiving, by the transmitting-end device, a first response message from the first device, adding a device identifier of the first device to the device list, and broadcasting the device list, wherein the first response message is used to indicate that the first device agrees to join the sharing group, and the first response message comprises the device identifier of the first device.

6. The method according to claim 5, wherein the method further comprises:
if each receiving-end device in the sharing group successfully receives the to-be-shared file, deleting, by the transmitting-end device, a device identifier of each receiving-end device from the device list.

7. An electronic device (200), wherein the electronic device (200) comprises a memory (221), a display (294), a communication module (260), and one or more processors (210), wherein the memory (221), the display (294), and the communication module (260) are coupled to the processor (210), the display (294) is configured to display (294) an image or interface generated by the processor (210), the communication module (260) is configured to communicate with another device, and the memory (221) is configured to store data in the electronic device (200); and the memory (221) is further configured to store computer program code, the computer program code comprises computer instructions, and when the computer instructions are executed by the processor (210), the electronic device (200) is enabled to perform the method according to any one of claims 1 to 6.

## Patentansprüche

1. Dateifreigabeverfahren, angewendet auf ein Szenario, in dem eine Sendeseitenvorrichtung eine Datei an eine Vielzahl von Empfangsseitenvorrichtungen freigibt, wobei das Verfahren umfasst:
Empfangen, durch die Sendeseitenvorrichtung, eines an jeder der Vielzahl von Empfangsseitenvorrichtungen durchgeführten Selektionsablaufs, wobei der Selektionsablauf verwendet wird, um die Sendeseitenvorrichtung zu veranlassen, eine freizugebende Datei an eine entsprechende Empfangsseitenvorrichtung zu schicken, und die Vielzahl von Empfangsseitenvorrichtungen eine erste Vorrichtung, eine zweite Vorrichtung und eine dritte Vorrichtung umfasst;
Schicken, durch die Sendeseitenvorrichtung, der freizugebenden Datei an die erste Vorrichtung;
Schicken, nachdem die Sendeseitenvorrichtung das Freigeben der freizugebenden Datei mit der ersten Vorrichtung beendet hat, der freizugebenden Datei an die dritte Vorrichtung durch die Sendeseitenvorrichtung; und
Signalisieren, durch die Sendeseitenvorrichtung, der ersten Vorrichtung, die freizugebende Datei an die zweite Vorrichtung zu schicken, oder Signalisieren, durch die Sendeseitenvorrichtung, der zweiten Vorrichtung, die freizugebende Datei von der ersten Vorrichtung zu erhalten,
wobei das Verfahren ferner umfasst:
Erzeugen, durch die Sendeseitenvorrichtung, eines ersten Fixpunkts, wobei der erste Fixpunkt durch die Sendeseitenvorrichtung verwendet wird, um Freigabedatensatzinformationen der freizugebenden Datei unter der Vielzahl von Empfangsseitenvorrichtungen zu erfassen;
Aktualisieren, durch die Sendeseitenvorrichtung, des ersten Fixpunkts, basierend auf Sendezustandsinformationen jeder Empfangsseitenvorrichtung; und
Synchronisieren, durch die Sendeseitenvorrichtung, eines aktualisierten ersten Fixpunkts mit der Vielzahl von Empfangsseitenvorrichtungen; und
Auswählen (S1302), durch die dritte Vorrichtung, falls die dritte Vorrichtung daran scheitert, die freizugebende Datei zu empfangen (S1301), basierend auf einem aktualisierten Fixpunkt, der ersten Vorrichtung aus Empfangsseitenvorrichtungen, die die freizugebende Datei aufweisen; und
Erhalten (S1306), durch die dritte Vorrichtung, der freizugebenden Datei von der ersten Vorrichtung aus Empfangsseitenvorrichtungen, die die freizugebende Datei aufweisen.

2. Verfahren nach Anspruch 1, wobei die Sendeseitenvorrichtung das Freigeben der freizugebenden Datei an die erste Vorrichtung beendet, das umfasst:
Empfangen, durch die Sendeseitenvorrichtung, einer ersten Signalnachricht von der ersten Vorrichtung, wobei die erste Signalnachricht verwendet wird, um zu signalisieren, dass die erste Vorrichtung die freizugebende Datei von der Sendeseitenvorrichtung erfolgreich empfängt.

3. Verfahren nach Anspruch 1 oder 2, wobei, nach dem Empfangen durch die Sendeseitenvorrichtung eines an jeder der Vielzahl von Empfangsseitenvorrichtungen durchgeführten Selektionsablaufs, das Verfahren ferner umfasst:
Anzeigen, durch die Sendeseitenvorrichtung, von Sendezustandsinformationen des Übertragens der freizugebenden Datei an die Empfangsseitenvorrichtungen, wobei die Sendezustandsinformationen der Empfangsseitenvorrichtungen erste Zustandsinformationen und zweite Zustandsinformationen umfassen, wobei die ersten Zustandsinformationen verwendet werden, um zu signalisieren, dass die freizugebende Datei an eine entsprechende Empfangsseitenvorrichtung geschickt wird, und die zweiten Zustandsinformationen verwendet werden, um zu signalisieren, dass die freizugebende Datei bereit ist, an eine entsprechende Empfangsseitenvorrichtung geschickt zu werden, wobei
in einem Prozess, in dem die Sendeseitenvorrichtung die freizugebende Datei an die erste Vorrichtung schickt, Sendezustandsinformationen der ersten Vorrichtung die ersten Zustandsinformationen sind und Sendezustandsinformationen der zweiten Vorrichtung und der dritten Vorrichtung die zweiten Zustandsinformationen sind.

4. Verfahren nach Anspruch 3, wobei das Verfahren ferner umfasst:
Anzeigen, durch die Sendeseitenvorrichtung, von Sendezustandsinformationen der dritten Vorrichtung als die ersten Zustandsinformationen in einem Prozess, in dem die Sendeseitenvorrichtung die freizugebende Datei an die dritte Vorrichtung schickt; und
Anzeigen, durch die Sendeseitenvorrichtung, von Sendezustandsinformationen der zweiten Vorrichtung als die ersten Zustandsinformationen in einem Prozess, in dem die erste Vorrichtung die freizugebende Datei an die zweite Vorrichtung schickt.

5. Verfahren nach einem der Ansprüche 1 bis 4, wobei der Selektionsablauf ferner verwendet wird, um die Sendeseitenvorrichtung zu veranlassen, die entsprechende Empfangsseitenvorrichtung zu einer Freigabegruppe, die die Sendeseitenvorrichtung umfasst, hinzuzufügen, und das Verfahren ferner umfasst:
Erstellen, durch die Sendeseitenvorrichtung, der Freigabegruppe, die die Sendeseitenvorrichtung umfasst, Erzeugen einer Vorrichtungsliste der Freigabegruppe und Schicken einer ersten Anforderungsnachricht an die Vielzahl von Empfangsseitenvorrichtungen, wobei die erste Anforderungsnachricht verwendet wird, um die Vielzahl von Empfangsseitenvorrichtungen anzufordern, der Freigabegruppe beizutreten, und die Vorrichtungsliste eine Vorrichtungskennung der Sendeseitenvorrichtung umfasst; und
Empfangen, durch die Sendeseitenvorrichtung, einer ersten Antwortnachricht von der ersten Vorrichtung, Hinzufügen einer Vorrichtungskennung der ersten Vorrichtung zu der Vorrichtungsliste und Rundsenden der Vorrichtungsliste, wobei die erste Antwortnachricht verwendet wird, um zu signalisieren, dass die erste Vorrichtung zustimmt, der Freigabegruppe beizutreten, und die erste Antwortnachricht die Vorrichtungskennung der ersten Vorrichtung umfasst.

6. Verfahren nach Anspruch 5, wobei das Verfahren ferner umfasst:
Löschen, durch die Sendeseitenvorrichtung, falls jede Empfangsseitenvorrichtung in der Freigabegruppe die freizugebende Datei erfolgreich empfängt, einer Vorrichtungskennung jeder Empfangsseitenvorrichtung aus der Vorrichtungsliste.

7. Elektronische Vorrichtung (200), wobei die elektronische Vorrichtung (200) einen Speicher (221), eine Anzeige (294), ein Kommunikationsmodul (260) und einen oder mehrere Prozessoren (210) umfasst, wobei der Speicher (221), die Anzeige (294) und das Kommunikationsmodul (260) an den Prozessor (210) gekoppelt sind, die Anzeige (294) konfiguriert ist, um ein durch den Prozessor (210) erzeugtes Bild oder eine Schnittstelle anzuzeigen (294), das Kommunikationsmodul (260) konfiguriert ist, um mit einer anderen Vorrichtung zu kommunizieren, und der Speicher (221) konfiguriert ist, um Daten in der elektronischen Vorrichtung (200) abzuspeichern; und der Speicher (221) ferner konfiguriert ist, um Computerprogrammcode abzuspeichern, wobei der Computerprogrammcode Computerbefehle umfasst, und, wenn die Computerbefehle durch den Prozessor (210) ausgeführt werden, die elektronische Vorrichtung (200) aktiviert wird, um das Verfahren nach einem der Ansprüche 1 bis 6 durchzuführen.

## Revendications

1. Procédé de partage de fichier, appliqué à un scénario dans lequel un dispositif d'extrémité de transmission partage un fichier avec une pluralité de dispositifs d'extrémité de réception, dans lequel le procédé comprend :
la réception, par le dispositif d'extrémité de transmission, d'une opération de sélection réalisée sur chacun de la pluralité de dispositifs d'extrémité de réception, dans lequel l'opération de sélection est utilisée pour déclencher le dispositif d'extrémité de transmission pour envoyer un fichier à partager à un dispositif d'extrémité de réception correspondant, et la pluralité de dispositifs d'extrémité de réception comprend un premier dispositif, un deuxième dispositif et un troisième dispositif ;
l'envoi, par le dispositif d'extrémité de transmission, du fichier à partager au premier dispositif ;
après que le dispositif d'extrémité de transmission a terminé de partager le fichier à partager avec le premier dispositif, l'envoi, par le dispositif d'extrémité de transmission, du fichier à partager au troisième dispositif ; et
l'indication, par le dispositif d'extrémité de transmission, au premier dispositif d'envoyer le fichier à partager au deuxième dispositif, ou l'indication, par le dispositif d'extrémité de transmission, au deuxième dispositif d'obtenir le fichier à partager à partir du premier dispositif,
dans lequel le procédé comprend en outre :
la génération, par le dispositif d'extrémité de transmission, d'un premier registre, dans lequel le premier registre est utilisé par le dispositif d'extrémité de transmission pour enregistrer des informations d'enregistrement de partage du fichier à partager entre la pluralité de dispositifs d'extrémité de réception ;
la mise à jour, par le dispositif d'extrémité de transmission, du premier registre sur la base d'informations d'état de transmission de chaque dispositif d'extrémité de réception ; et
la synchronisation, par le dispositif d'extrémité de transmission, d'un premier registre mis à jour avec la pluralité de dispositifs d'extrémité de réception ; et
si le troisième dispositif ne parvient pas à recevoir le fichier à partager (S1301), la sélection (S1302), par le troisième dispositif sur la base d'un registre mis à jour, du premier dispositif parmi des dispositifs d'extrémité de réception qui ont le fichier à partager ; et
l'obtention (S1306), par le troisième dispositif, du fichier à partager à partir du premier dispositif parmi des dispositifs d'extrémité de réception qui ont le fichier à partager.

2. Procédé selon la revendication 1, dans lequel le dispositif d'extrémité de transmission terminant de partager le fichier à partager avec le premier dispositif comprend :
la réception, par le dispositif d'extrémité de transmission, d'un premier message d'indication en provenance du premier dispositif, dans lequel le premier message d'indication est utilisé pour indiquer que le premier dispositif reçoit avec succès le fichier à partager en provenance du dispositif d'extrémité de transmission.

3. Procédé selon la revendication 1 ou 2, dans lequel, après la réception, par le dispositif d'extrémité de transmission, d'une opération de sélection réalisée sur chacun de la pluralité de dispositifs d'extrémité de réception, le procédé comprend en outre :
l'affichage, par le dispositif d'extrémité de transmission, d'informations d'état de transmission de la transmission du fichier à partager aux dispositifs d'extrémité de réception, dans lequel les informations d'état de transmission des dispositifs d'extrémité de réception comprennent des premières informations d'état et des secondes informations d'état, les premières informations d'état sont utilisées pour indiquer que le fichier à partager est envoyé à un dispositif d'extrémité de réception correspondant, et les secondes informations d'état sont utilisées pour indiquer que le fichier à partager est prêt à être envoyé à un dispositif d'extrémité de réception correspondant, dans lequel
dans un processus dans lequel le dispositif d'extrémité de transmission envoie le fichier à partager au premier dispositif, des informations d'état de transmission du premier dispositif sont les premières informations d'état, et des informations d'état de transmission du deuxième dispositif et du troisième dispositif sont les secondes informations d'état.

4. Procédé selon la revendication 3, dans lequel le procédé comprend en outre :
l'affichage, par le dispositif d'extrémité de transmission, d'informations d'état de transmission du troisième dispositif en guise de premières informations d'état dans un processus dans lequel le dispositif d'extrémité de transmission envoie le fichier à partager au troisième dispositif ; et
l'affichage, par le dispositif d'extrémité de transmission, d'informations d'état de transmission du deuxième dispositif en guise de premières informations d'état dans un processus dans lequel le premier dispositif envoie le fichier à partager au deuxième dispositif.

5. Procédé selon l'une quelconque des revendications 1 à 4, dans lequel l'opération de sélection est en outre utilisée pour déclencher le dispositif d'extrémité de transmission pour ajouter le dispositif d'extrémité de réception correspondant à un groupe de partage qui comprend le dispositif d'extrémité de transmission, et le procédé comprend en outre :
la création, par le dispositif d'extrémité de transmission, du groupe de partage qui comprend le dispositif d'extrémité de transmission, la génération d'une liste de dispositifs du groupe de partage, et l'envoi d'un premier message de demande à la pluralité de dispositifs d'extrémité de réception, dans lequel le premier message de demande est utilisé pour demander à la pluralité de dispositifs d'extrémité de réception de rejoindre le groupe de partage, et la liste de dispositifs comprend un identifiant de dispositif du dispositif d'extrémité de transmission ; et
la réception, par le dispositif d'extrémité de transmission, d'un premier message de réponse en provenance du premier dispositif, l'ajout d'un identifiant de dispositif du premier dispositif à la liste de dispositifs, et la diffusion de la liste de dispositifs, dans lequel le premier message de réponse est utilisé pour indiquer que le premier dispositif accepte de rejoindre le groupe de partage, et le premier message de réponse comprend l'identifiant de dispositif du premier dispositif.

6. Procédé selon la revendication 5, dans lequel le procédé comprend en outre :
si chaque dispositif d'extrémité de réception dans le groupe de partage reçoit avec succès le fichier à partager, la suppression, par le dispositif d'extrémité de transmission, d'un identifiant de dispositif de chaque dispositif d'extrémité de réception de la liste de dispositifs.

7. Dispositif électronique (200), dans lequel le dispositif électronique (200) comprend une mémoire (221), une unité d'affichage (294), un module de communication (260), et un ou plusieurs processeurs (210), dans lequel la mémoire (221), l'unité d'affichage (294) et le module de communication (260) sont couplés au processeur (210), l'unité d'affichage (294) est configuré pour afficher (294) une image ou une interface générée par le processeur (210), le module de communication (260) est configuré pour communiquer avec un autre dispositif, et la mémoire (221) est configurée pour stocker des données dans le dispositif électronique (200) ; et la mémoire (221) est configurée pour stocker un code de programme informatique, le code de programme informatique comprend des instructions informatiques, et lorsque les instructions informatiques sont exécutées par le processeur (210), le dispositif électronique (200) est activé pour réaliser le procédé selon l'une quelconque des revendications 1 à 6.
